# EUROPEAN PATENT SPECIFICATION

(11) **EP 3 998 172 B1**
(45) Date of publication and mention of the grant of the patent: **01.05.2024**
(21) Application number: 20844925.6
(22) Date of filing: 20.07.2020
(51) Int. Cl.: B60K 6/442, B60W 10/26, B60W 10/06, B60W 10/08, B60K 6/46, B60L 15/20, B60L 50/61, B60L 58/13, H02J 7/00, H02J 7/14

(54) **SERIES HYBRID VEHICLE**
SERIENHYBRIDFAHRZEUG
VÉHICULE HYBRIDE SÉRIE

(30) Priority: 19.07.2019 WO PCT/JP2019/028434
(43) Date of publication of application: 18.05.2022
(73) Proprietor: Yamaha Hatsudoki Kabushiki Kaisha, Iwata-shi, Shizuoka 438-8501 (JP)
(72) Inventor: MASUDA, Masafumi, Iwata-shi, Shizuoka 438-8501 (JP); BIMO, Wicaksono, Iwata-shi, Shizuoka 438-8501 (JP)
(74) Representative: Stöckeler, Ferdinand
(86) International application number: PCT/JP2020/028055
(87) International publication number: WO 2021/015163

(56) References cited:
- JP-A- H11 103 505
- JP-A- 2011 149 726
- JP-A- 2011 162 178
- JP-A- 2011 239 639
- JP-A- 2016 102 441
- JP-A- 2018 012 347
- US-B2- 9 403 439

## Description

### Technical Field

This invention relates to a series hybrid vehicle.

### Background Art

A hybrid vehicle is disclosed for example, in Patent Literature 1. In a hybrid vehicle, electric power is supplied from a battery to a motor in order to achieve acceleration according to the operator's request. In addition, regenerative braking is performed by charging power generated by a motor in a battery at deceleration. The allowable amount and the acceleration ability of power generation at regenerative braking are affected by the battery state. The hybrid vehicle of Patent Literature 1 monitors the battery state by periodically acquiring the charge amount of a battery.

As a method for acquiring the charged level of a battery, there is a method for calculating the SOC (State of Charge) from the open circuit voltage of the battery. The open circuit voltage of a battery is a terminal voltage of the battery measured when the battery electric current is zero. The SOC of a battery is calculated by detecting the remaining battery level corresponding to the detected open circuit voltage of the battery. The remaining battery level is detected referring to its own characteristic of the relationship between the open circuit voltage and the remaining battery level.

JP 2011 149726 A, as well as JP H11 103505 A, discloses a series hybrid vehicle comprising a battery pack, an engine, a generator, a power converter and a vehicle running motor. The power converter comprises a DC power supply unit which converts an output of the generator that operates with a driving force of the engine into DC power, an inverter for supplying the vehicle running motor and a charge control unit for controlling the operation of the DC power supply unit. DC power generated by the DC power supply unit is used as charging power supply.

### Citation List

### Patent Literature

[Patent Literature 1] JP-A-2017-206046
[Patent document 2] JP-A-H11-103505

### Summary of Invention

### Technical Problem

The vehicle in Patent Literature 1 is a parallel hybrid vehicle in which a motor is used as an auxiliary power source that assists the driving by an engine. The parallel hybrid vehicle in Patent Literature 1 drives the wheel by power from an engine and restricts the electric power supplied to a motor, thereby preventing the discharging and charging of a battery from occurring. The parallel hybrid vehicle of Patent Literature 1 detects the electric current and the terminal voltage of a battery multiple times, detects the open circuit voltage of the battery, and calculates the SOC of the battery. Due to this, in Patent Literature 1, the charged level of the battery can be acquired in the parallel hybrid vehicle, even during running.

The parallel hybrid vehicle of Patent Literature 1 has a period for attenuating the variation of the battery open circuit voltage in order to precisely detect the charged level of the battery. The vehicle of Patent Literature 1 restricts the electric power of a motor during a period for detecting the battery open circuit voltage in order to calculate the charged level of the battery.

Hybrid vehicles include, in addition to the above-mentioned parallel hybrid vehicles, series hybrid vehicles in which propulsion units are not directly driven by engines. A series hybrid vehicle drives a power generation electric motor by a power generation engine to generate electric power and drives a propulsive electric motor by electric power derived from at least either one of a power generation electric motor and a battery. In the series hybrid vehicle, a propulsion system is driven by power outputted from the propulsive electric motor and separated from the path for transmitting the power from an engine. Therefore, if the electric power of a motor (propulsive electric motor) is restricted in a series hybrid vehicle during running for acquiring the charged level of a battery, the running itself is also restricted.

It is required that a precise battery charged level is acquired with high frequency in a series hybrid vehicle.

An objective of this invention is to provide a series hybrid vehicle capable of acquiring a precise battery charged level with high frequency.

### Solution to the Problem

The present inventors have studied how to acquire a precise battery charged level of a series hybrid vehicle.

A series hybrid vehicle is disclosed for example, in Patent Literature 2. In the system disclosed in Patent Literature 2, the detected charge/discharge electric current values of a battery are first integrated to calculate the charged level of the battery. However, according to Patent Literature 2, slight inaccuracies are likely to accumulate in the charged level calculated as integration results. That is, the charged level calculated by integral calculation is not precise. Therefore, in the system in Patent Literature 2, the electric power generated by a power generator is made to coincide with a detected value of the consumed electric power by the motor. More specifically, a vehicle speed is detected, then a running resistance corresponding to the vehicle speed is calculated with reference to a map, and a power generator generates the electric power corresponding to the running resistance. According to Patent Literature 2, generating the electric power by a power generator corresponding to the running resistance eliminates the need for supplying running electric power from a battery to a motor. The charge/discharge electric current of the battery becomes zero. The charged level of the battery is estimated based on the voltage at this time, and the charged level calculated by integration of detected electric current values is corrected. According to the system disclosed in Patent Literature 2, the inaccuracies that occur by integrating the detected electric current values can be corrected by estimating the battery charged level based on the voltage.

The present inventors have studied how to acquire a charged level in detail and have found that it is not easy for a precise charged level to be acquired in an actual series hybrid vehicle, even when a power generator is controlled based on the running resistance corresponding to a vehicle speed.

As already described, a period for attenuating the battery voltage variation is required for precisely detecting a charged level of a battery. This is because the voltage of a battery varies just after charging or discharging, even when no electric current flows into a battery.

Theoretically, when the vehicle speed is constant, and the variation of the running resistance does not exist, the electric current of a battery can be zero as indicated in Patent Literature 2 when a power generator generates the electric power for the running resistance corresponding to the vehicle speed.

However, the electric current of a battery actually cannot be zero within a period from the start of the running of a series hybrid vehicle until the state where the vehicle speed becomes constant and the variation of running resistance does not exist. In addition, acceleration and deceleration are repeated in an actual running of a series hybrid vehicle. Even if an operator feels that the vehicle speed is constant, the speed actually varies. Furthermore, the running resistance varies due to the air resistance, road slope, and road roughness.

For example, there is a moment at which the degree of acceleration becomes zero between acceleration and deceleration. However, as described above, a period for attenuating the battery voltage variation is required for precisely detecting the charged level of the battery. Actually, the frequency of occurrence of the situation, whereby both the vehicle speed and the running resistance are constant such that a period for attenuating the variation of the battery voltage can be maintained, is restricted. In Patent Literature 2, a charged level is basically obtained by the integral calculation of electric currents. If the correction by estimating the precise charged level is not applied, a charged level with low accuracy is used.

The present inventors have further studied how to acquire the charged level, and, in this study, changed the viewpoint about the condition and had an idea to obtain the charged level based on the battery voltage when a series hybrid vehicle is being accelerated or decelerated.

Specifically, the converter and the inverter are controlled such that both the electric current outputted from the converter and the electric current supplied to the inverter based on an acceleration instruction are increased, and both the electric current outputted from the converter and the electric current supplied to the inverter based on a deceleration instruction are decreased. Due to this, the electric current generated by a power generation electric motor is supplied from the converter to the inverter without or substantially without supplying the electric current to the battery, and the power based on an acceleration instruction or a deceleration instruction is outputted from the propulsive electric motor.

Due to this, the electric current of the battery can be zero or substantially zero even when a series hybrid vehicle is being accelerated or decelerated. That is, the electric current of the battery can be zero or substantially zero without waiting for the vehicle speed to become constant. In addition, a period for attenuating the variation of the battery voltage can be easily maintained after the electric current of the battery becomes zero or substantially zero. That is, a period during which the battery voltage reflects the precise charged level of the battery can be easily maintained.

Even during acceleration or deceleration, the battery charged level can be acquired based on the battery voltage in a state where the voltage variation is attenuated. Therefore, the precise battery charged level can be acquired with high frequency.

To achieve the above objective, the series hybrid vehicle of this invention includes the features of appended independent Claim 1.

According to the embodiment of Claim 1, a controller of the series hybrid vehicle is configured to control the outputted electric current of the converter to correspond with the electric current variation of the inverter such that the variation amount of outputted electric current of the converter is equal to or substantially equal to the variation amount of input electric current of the inverter during a period for acquiring the charged level of the battery.

Therefore, in the series hybrid vehicle of Claim 1, the electric current does not flow into the battery even if the input electric current of the inverter changes during a period for acquiring the charged level of the battery. Accordingly, the voltage of the battery is substantially equal to an open circuit voltage. Therefore, the charged level can be precisely calculated based on a battery open circuit voltage. Note that the term "equal to or substantially equal to" used herein is not limited to a case where it is equal in a strict meaning and means that a lag derived from a time lag in control or the like is allowed. In the series hybrid vehicle of Claim 1, the controller increases the margin output of the power generation engine by increasing the engine rotation speed of the power generation engine before an acceleration instruction. The margin output refers to a difference between the power outputted from the power generation engine at a certain opening degree of a throttle valve and the power outputted from the power generation engine with the throttle fully open while maintaining the engine rotation speed. When the margin output of the power-generation engine increases, the power increase of the power generation engine, that is, electric power increase of the power generation electric motor, easily responds to an acceleration instruction associated with a great change amount. That is, frequencies that can suppress the electric current outputted from the battery in response to an acceleration instruction associated with a great change amount increase. Accordingly, in the series hybrid vehicle of Claim 1, the precise battery charged level can be acquired with a higher frequency.

According to a particular embodiment of this invention, a propulsion instruction part is an accelerator manipulator operated by an operator of the series hybrid vehicle.

The series hybrid vehicle enables an acceleration operation of the series hybrid vehicle by an operator operating an accelerator manipulator, even during a period for acquiring the charged level of the battery.

According to another particular embodiment of this invention, the acceleration instruction or the deceleration instruction are based on wireless signals received from a remote control device away from the series hybrid vehicle.

The propulsion instruction part of the series hybrid vehicle according to this embodiment is a reception part that receives wireless signals from a remote control device operated by an operator of a series hybrid type vehicle. The propulsion instruction part outputs an acceleration instruction based on the wireless signals. The series hybrid vehicle of this embodiment can enable an acceleration operation of the series hybrid vehicle by remote control by an operator operating a remote control device even during a period for acquiring the charged level of the battery.

According to another particular embodiment of this invention,
the propulsion instruction part is an autonomous propulsion instruction part configured to output the acceleration instruction or the deceleration instruction based on travel route information of the series hybrid vehicle regardless of operation for acceleration or deceleration by an operator.

The propulsion instruction part of the series hybrid vehicle of this embodiment autonomously outputs an acceleration instruction or a deceleration instruction regardless of the operation by an operator. The series hybrid vehicle can be autonomously propelled. The series hybrid vehicle of this embodiment can acquire the precise battery charged level with high frequency even in the case of being autonomously propelled.

The terminology used herein is for the purpose of defining only specific embodiments and is not intended to limit the invention. The term "and/or" used in the present description includes any or all combinations of one or a plurality of related and listed items. When used in the present description, the use of the terms "including", "comprising" or "having" and the variations thereof specifies the presence of the described features, steps, operations, elements, components, and/or equivalents thereof and may include one or a plurality of steps, motions, elements, components, and/or groups thereof. When used in the present description, the terms "attached", "connected", "coupled", and/or equivalents thereof are widely used, and the terms include both direct and indirect attachment, connection, and coupling. Furthermore, the terms "connected" and "coupled" are not particularly limited to physical or mechanical connection or coupling and may include direct or indirect electrical connection and coupling. Unless otherwise defined, all terms (including technical terms and scientific terms) used in the present description have the same meanings as commonly understood by a skilled person to whom the present invention belongs. A term as defined in commonly used dictionaries is to be interpreted to have a meaning corresponding to the meaning in the related art and in the context of the present disclosure, and unless explicitly defined in the present description, the term is never interpreted as an ideal or an excessively formal meaning. In explaining the present invention, it is to be understood that many techniques and steps are described.

In the present description, a new series hybrid vehicle is described. A large number of specific details for providing a complete understanding of this invention will be described in the following explanations for the purpose of explanation. However, it is apparent that a person skilled in the art can implement this invention even without these specific details. The present disclosure should be considered as an illustration of the present invention and is not intended to limit the scope of the invention as defined by the appended claims.

The series hybrid vehicle is series hybrid vehicle transportation means. In the series hybrid vehicle, a propulsion system such as wheels is driven by the power outputted from the propulsive electric motor. The propulsion system is not connected to the path transmitting the power from a crankshaft. Therefore, the propulsion system is configured such that the power outputted from the power generation engine is not mechanically transmitted. That is, the series hybrid vehicle in this disclosure does not include a so-called series-parallel hybrid vehicle. The series hybrid vehicle is, for example, a series hybrid vehicle having wheels. Examples of the vehicle according to the series hybrid vehicle includes automobiles, trains, ships, aircrafts, and the like. An automobile is not particularly limited, and examples thereof include four-wheeled automobiles, straddled vehicles, and the like. A four-wheeled automobile, for example, has a vehicle interior. An aircraft is not particularly limited, and examples thereof include rotorcrafts, fixed-wing aircrafts, and the like. Examples of rotorcrafts include helicopters, multicopters, and drones. Examples of fixed-wing aircrafts include airplanes. The vehicle may be directly driven by an operator aboard the vehicle or may be wirelessly driven without any driver aboard the vehicle. The vehicle may be a golf car. The vehicle may be a caterpillar-type snowmobile. The vehicle may be a snow blower. The vehicle may be configured such that an operator who operates the vehicle can be aboard or may be configured such that no operator is aboard. The vehicle may be configured so as to be remotely controlled or configured such that the vehicle travels by autonomous driving.

The straddled vehicle is a vehicle in which an operator sits across the saddle. Examples of the straddled vehicle include scooter type, moped type, off-road type, and on-road type motorcycles. The straddled vehicle is not limited to a motorcycle and may be, for example, a motor three-wheeler, an ATV (All-Terrain Vehicle), and the like. A motor three-wheeler may be provided with two front wheels and one rear wheel or one front wheel and two rear wheels. The propulsion system of a straddled vehicle may be a rear wheel or may be a front wheel. The propulsion system of a straddled vehicle may be both of rear and front wheels.

The vehicle is, for example, configured as turnable in a lean position. The vehicle configured as turnable in a lean position is configured so as to turn in a position tilted in the inward direction of the curve. Duet to this feature, the vehicle configured as turnable in a lean position runs against the centrifugal force applied to the vehicle during turning. Examples of the vehicle configured as turnable in a lean position include straddled vehicles configured as turnable in a lean position (for example, a motorcycle and a motor three-wheeler). Since the vehicle configured as turnable in a lean position is required to show pleasantness, the responsiveness of progress to acceleration and deceleration is important.

Examples of the power generation engine include a single-cylinder engine and an engine having two or more cylinders. The operation of the power generation engine refers to outputting the power generated by the combustion of the gas as torque and a rotation speed of a crankshaft. For example, the engine is a four-stroke engine having a high load region and a low load region in the four strokes. A four-stroke engine having a high load region and a low load region in the four strokes is, for example, a single-cylinder engine, a two-cylinder engine, an irregular interval combustion-type three-cylinder engine, or an irregular interval combustion-type four-cylinder engine. The high load region refers to a region where the load torque is higher than the average value of the load torque in one combustion cycle among the entire single combustion cycle of the engine. However, the power generation engine may be a regular interval combustion-type engine having three or more cylinders.

The fuel consumption rate of an engine refers to a value indicating how much amount of fuel is consumed for an engine to do a certain job. The fuel consumption rate is represented, for example, by the fuel consumption per hour to obtain 1 kW output.

The minimum fuel consumption rate curve indicates the operating points at which the fuel consumption rate becomes minimum in each power of an engine. The fuel consumption varies depending on, for example, the torque and the rotation speed of the engine, even at a certain power. The minimum fuel consumption rate curve is constituted of engine operating points in a condition for obtaining the minimum fuel consumption amount at each power. That is, the minimum fuel consumption rate curve indicates a minimum fuel consumption amount obtained by optimizing the condition excluding the engine power at each power.

For example, a propulsion instruction part is an accelerator manipulator. For example, the accelerator manipulator is an accelerator grip. For example, the accelerator manipulator may be a pedal. For example, the operation amount of an accelerator manipulator is an operation amount of an accelerator manipulator based on a state where no control force is provided. For example, the operation amount is a displacement of an accelerator grip by an operation to the position of the accelerator grip in a state where no control force is provided. However, the operation amount is not limited thereto, and may be an amount of force applied by an operation to a state where no control force is provided.

For example, the propulsion instruction part may be a reception part that receives wireless signals indicating acceleration or deceleration from a remote-control device operated by an operator of a series hybrid vehicle. For example, the remote-control device is a remote controller. The remote-control device sends wireless signals indicating acceleration or deceleration of the series hybrid vehicle by the driver operating a lever. For example, the operation amount of a remote-control device is an operation amount of a lever based on a state where no control force is provided. For example, the operation amount is a displacement of a lever by an operation to the position of the lever in a state where no control force is provided. However, the operation amount is not limited thereto, and may be an amount of force applied to a lever to a state where no control force is provided.

For example, a propulsion instruction part may be an automatic propulsion controller. The automatic propulsion controller outputs an acceleration instruction or a deceleration instruction based on a travel route or a flight route and the speed set along these routes of a series hybrid vehicle. For example, an automatic propulsion controller may output an acceleration instruction or a deceleration instruction for autonomously restoring speed when the speed changes by disturbances such as wind directions and road surface inclinations. For example, an automatic propulsion controller may receive a target speed or target direction instructed from a remote-control device and output an acceleration instruction or a deceleration instruction that can maintain the target.

The acceleration instruction received from the propulsion instruction part refers to an acceleration instruction outputted from the propulsion instruction part for accelerating the series hybrid vehicle. For example, the operation amount of the accelerator manipulator by the driver's acceleration operation is converted into electric signals as an acceleration instruction in the propulsion instruction part. The deceleration instruction received from the propulsion instruction part refers to a deceleration instruction outputted from the propulsion instruction part for decelerating the series hybrid vehicle. For example, a deceleration instruction is an output by an operator weakening the operation force to an accelerator manipulator to decelerate the series hybrid vehicle. For example, when the operation force to the accelerator manipulator is weakened, the electric power supplied to the propulsive electric motor by a deceleration instruction decreases. Therefore, the acceleration of the series hybrid vehicle stops, and the series hybrid vehicle slows down.

When the series hybrid vehicle is a drone flying in the sky, rising against gravitational acceleration, that is, an increase in height corresponds to acceleration. For example, when a drone moves in the horizontal direction while taking an inclined attitude, an increase in speed in the horizontal direction corresponds to acceleration. Meanwhile, the reduction of the speed in the horizontal direction corresponds to deceleration.

For example, an acceleration instruction and a deceleration instruction include required power representing the degrees of acceleration and deceleration. Required power represents the amount of power that should be outputted from the propulsive electric motor. The required power is, for example, an amount corresponding to the degrees of acceleration and deceleration. However, an acceleration instruction and a deceleration instruction are not limited to this, and for example, may represent acceleration and deceleration simply for a fixed amount of power.

Increase of both the electric current outputted from the converter and the electric current supplied to the inverter and decrease of both the electric current outputted from the converter and the electric current supplied to the inverter are, for example, control such that the variation amount of the output electric current of the converter is equal to or substantially equal to the variation amount of the input electric current of the inverter. For example, the controller equalizes or substantially equalizes the variation amount in an electric current instruction provided to the converter with the variation amount in an electric current instruction provided to the inverter.

For example, the controller equalizes or substantially equalizes the variation speed in the electric current instruction provided to the converter with the variation speed in the electric current instruction provided to the inverter. However, the controller is not limited to this, and for example, the variation speed may be different between the converter and the inverter. For example, the magnitude (absolute value) of the electric current in an electric current instruction to the converter may differ from the magnitude (absolute value) of the electric current in an electric current instruction to the inverter. For example, the magnitude of the electric current in an electric current instruction to the converter may be larger by the consumed electric power of an auxiliary machine than the magnitude of the electric current in an electric current instruction to the inverter.

The controller performs control such that both the electric current outputted from the converter and the electric current supplied to the inverter based on an acceleration instruction are increased, and both the electric current outputted from the converter and the electric current supplied to the inverter based on a deceleration instruction are decreased. However, the period when the controller performs the above control is not particularly limited. For example, the controller may always perform the above control.

Meanwhile, the controller may perform the above control in a period for acquiring the charged level of the battery. For example, the controller intermittently acquires the charged level of the battery. For example, the periods for acquiring the charged level of the battery appear periodically. In a period other than a period for acquiring the charged level of the battery, both the electric current outputted from the converter and the electric current supplied to the inverter based on acceleration instruction are not necessarily increased. Alternatively, for example, in a period other than a period for acquiring the charged level of the battery, the increased amount of the electric current outputted from the converter and the increased amount of the electric current supplied to the inverter may not be substantially equal. In this case, the electric current of the battery is electric current other than zero. For example, in this case, the electric current supplied to the inverter by the electric power outputted from the battery upon acceleration is increased. Furthermore, the battery is charged by a part of the electric current supplied to the inverter upon deceleration.

The reproducibility of responsiveness of acceleration of a vehicle to an acceleration operation refers to that the variation of the response of acceleration of the vehicle to an acceleration instruction is reduced. The reproducibility of the response of acceleration of a vehicle is acquired based on the time until the acceleration reaches a prescribed level or the increased amount of the degree of acceleration in response to an acceleration operation. The reproducibility of the response of acceleration of a vehicle may be acquired, for example, based on the time until the acceleration of the rotating shaft of a propulsive electric motor increases to reach a prescribed level or the increased amount of acceleration.

The power outputted from the propulsive electric motor triggered by an acceleration operation means the power outputted from the propulsive electric motor after the acceleration operation and before increasing the engine rotation speed of the power generation engine. For example, the power outputted from a power generation engine increases when the output torque of the power generation engine increases before the engine rotation speed of the power generation engine increases. This increases the power outputted from the power generation electric motor. In addition, the power outputted from a propulsive electric motor is increased.

The power generation electric motor is a rotating electrical machine capable of generating power. The power generation electric motor may be an electric motor different from a starting motor. The power generation electric motor may be an outer rotor-type electric motor or may be an inner rotor-type electric motor. Alternatively, the power generation electric motor may be an axial gap-type electric motor instead of a radial gap-type electric motor. The rotor can be provided with a permanent magnet in the power generation electric motor. The rotor can be provided with a permanent magnet in both the propulsive electric motor and the power generation electric motor.

The battery is an electric power storage device that stores electrical energy. The battery receives the supply of the electric power generated by the power generation electric motor. However, the electric power supplied to the battery is not particularly limited, and for example, may be electric power generated by the propulsive electric motor. That is, the battery may charge the electric power regeneratively generated by the propulsive electric motor.

A state where the electric current does not flow or not substantially flow into a battery encompasses a state where the electric current never flows into the battery, for example, when a battery terminal is released from the connection such as an external load. However, a state where the electric current does not flow or not substantially flow into a battery further encompasses a state where a minute electric current of a degree such that the battery charged level can be substantially estimated from the measured battery voltage flows. That is, the state where the electric current does not flow or not substantially flow into a battery is not limited to the state where the electric current flowing into the battery is reduced to zero, but encompasses a state where the electric current is reduced to a value substantially close to zero.

The open circuit voltage is a battery terminal-to-terminal voltage in a state where no load is electrically connected to battery terminals. The open circuit voltage can also be detected by making a state equivalent to a state where no load is connected, even when a load is connected to a battery terminal. That is, the voltage in a state where the electric current does not substantially flow into the battery is an open circuit voltage. For example, the open circuit voltage can be detected by making a state equivalent to a state where no load is connected by controlling the electric current flowing into the battery to be zero or substantially zero.

The propulsive electric motor is a rotating electrical machine capable of performing a motor operation. For example, the propulsive electric motor may be a rotating electrical machine enabling both power generation and motor operation. The propulsive electric motor may be an outer rotor-type electric motor or may be an inner rotor-type electric motor. Alternatively, the propulsive electric motor may be an axial gap-type electric motor instead of a radial gap-type electric motor.

Examples of the propulsion system include a wheel (driving wheel), a caterpillar, a propeller, and the like. When the vehicle is an automobile, the propulsion system may be, for example, a wheel (driving wheel). A propulsion wheel may be a rear wheel or may be a front wheel. A propulsion wheel may be both rear and front wheels. When the vehicle is an aircraft, the propulsion system may be, for example, a propeller.

The controller may have a processor executing a program or may be an electronic circuit.

The controller controls the output electric current of the converter such that, for example, the variation amount of the output electric current of the converter is equal to or substantially equal to the variation amount of the input electric current of the inverter. However, the controller is not particularly restricted, and for example, the controller controls the output electric current of the inverter such that the variation amount of the input electric current of the inverter is equal to or substantially equal to the variation amount of the output electric current of the converter. Alternatively, the controller may, for example, output an instruction of substantially equal variations as an instruction of the electric current to both the converter and the inverter.

### Advantageous Effects of the Invention

According to this invention, a series hybrid vehicle capable of acquiring the charged level of a battery even during propulsion can be provided.

### Brief Description of Drawings

Fig. 1 is a schematic diagram indicating the main constituents of a series hybrid vehicle according to a first embodiment of the invention.
Fig. 2 is a schematic diagram indicating each relationship among the main constituents of the series hybrid vehicle in Fig. 1.
Fig. 3 is a flowchart indicating the operation for acquiring the charged level of the battery by the controller of the series hybrid vehicle in Fig. 1.
Fig. 4 is a flowchart indicating the detailed operation of the control of the input electric current from the converter made by the controller of the series hybrid vehicle illustrated in Fig. 1.
Fig. 5 is a diagram for explaining the engine margin output of the series hybrid vehicle.
Fig. 6 is a flowchart indicating the detailed operation of the electric current output control of the output electric current from the converter made by the controller of the series hybrid vehicle.
Fig. 7 is a diagram for explaining the minimum fuel consumption rate curve of an engine of a series hybrid vehicle according to an example not falling within the subject-matter for which protection is sought.
Fig. 8 is a flowchart indicating the detailed operation of the electric current output control of the output electric current from the converter made by the controller of the series hybrid vehicle according to the example of Figure 7.

### Description of Embodiments

Hereinafter, this invention is described based on a preferred embodiment with reference to the drawings.

### [First Embodiment]

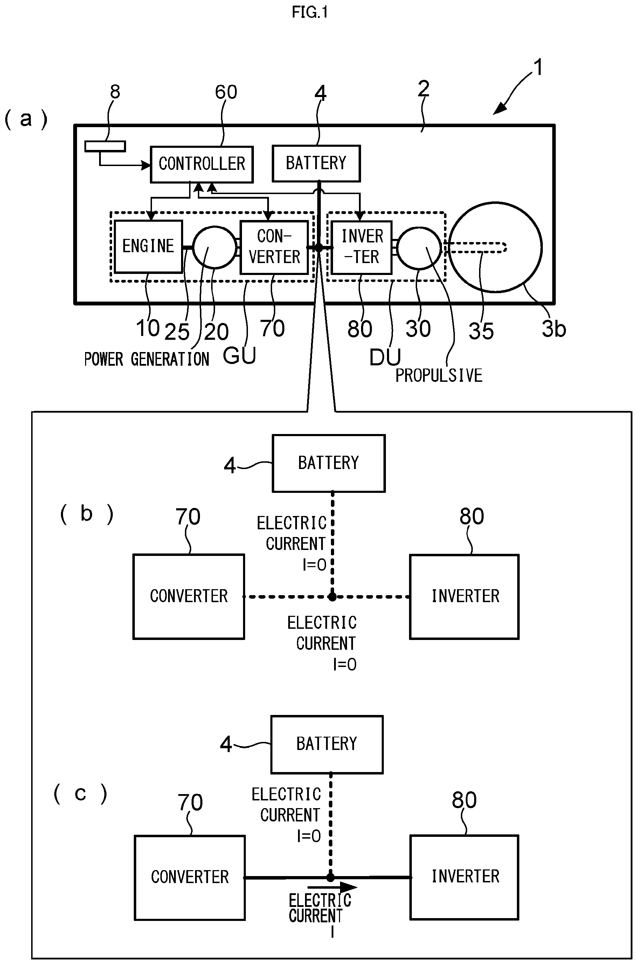

Fig. 1 is a schematic diagram indicating the main constituents of a series hybrid vehicle according to a first embodiment of this invention. The outline of the series hybrid vehicle of the present embodiment will be described with reference to Fig. 1. In the series hybrid vehicle of the present embodiment, an engine drives a power generator, and the electric power generated by the power generator drives the propulsion system.

The series hybrid vehicle 1 (hereinafter referred to as vehicle 1) illustrated in part (a) of Fig. 1 includes a vehicle body 2 and a propulsion system 3b rotatably attached to the vehicle body 2. The vehicle 1 includes a power generation unit GU, a propulsion unit DU, a controller 60, a battery 4, and a propulsion instruction part 8. For example, the vehicle 1 is a straddled vehicle. For example, the propulsion system 3b may be a wheel.

The power generation unit GU is mounted on the vehicle body 2 and includes a power generation engine 10, a power generation electric motor 20, and a converter 70.

The power generation engine 10 (hereinafter referred to as engine 10) has a rotatable crankshaft 15 (not illustrated). The engine 10 outputs power generated by the combustion of a mixed gas of air and fuel as the torque and the rotation speed of the crankshaft 15. The power generation electric motor 20 is driven by the engine 10 to generate electric power. The power generation electric motor 20 is disposed so as to operate in conjunction with the crankshaft 15. That is, the power generation electric motor 20 is connected to the crankshaft 15 via or not via the power transmission device 25. The converter 70 rectifies the electric current outputted from the power generation electric motor 20 and outputs the electric current.

The propulsion unit DU is mounted on the vehicle body 2 and includes a propulsive electric motor 30 and an inverter 80.

The propulsive electric motor 30 differs from the power generation electric motor 20. The propulsive electric motor 30 receives the electric current supply and drives the propulsion system 3b. The propulsive electric motor 30 drives the propulsion system 3b via or not via the power transmission device 35.

The propulsion system 3b is a propulsion system driven by the propulsive electric motor 30. The propulsion system 3b is not connected to the path transmitting the power from the crankshaft. 15 The propulsion system 3b is driven only by the power outputted from the propulsive electric motor 30.

The inverter 80 drives the propulsive electric motor 30 by at least part of the electric current outputted from the converter 70. For example, when a part of the electric current outputted from the converter 70 flows into the battery 4, a part of the electric current outputted from the converter 70 flows into the inverter 80. Alternatively, all electric currents outputted from the converter 70 may flow into the inverter 80 in some cases. The converter 70 and the inverter 80 are controlled by the controller 60. For example, the controller 60 controls the electric current outputted from the converter 70 and the electric current input to the inverter 80 by vector control (sine wave control). However, the controller 60 may control the electric current outputted from the converter 70 and the electric current input to the inverter 80 not only by vector control but also by simple PWM control or phase control.

The battery 4 is connected to the inverter 80 such that the battery is in parallel with the inverter, both being connected to the converter 70. The battery 4 charges the electric current outputted from the converter 70 and supplies the charged electric current to the inverter 80.

The propulsion instruction part 8 outputs an acceleration instruction or a deceleration instruction. According to particular embodiments, the propulsion instruction part 8 is an accelerator manipulator to which an acceleration operation or a deceleration operation is input by an operator of the vehicle 1. Alternatively, the propulsion instruction part 8 may be, for example, an automatic propulsion instruction part that outputs an acceleration instruction and a deceleration instruction based on travel route information of a reception part that outputs an acceleration instruction or a deceleration instruction based on signals received from a remote-control device.

The controller 60 periodically acquires the charged level of the battery 4 for monitoring the charged state of the battery 4. The charged level of the battery 4 can be acquired when the vehicle 1 stops. As illustrated in part (b) of Fig. 1, when the vehicle 1 stops, the electric current I is not supplied from the power generation electric motor 20 to the battery 4 via the converter 70, and the electric current I is not supplied from the battery 4 to the propulsive electric motor 30 via the inverter 80. Thus, the battery electric current becomes zero, and the controller 60 can acquire the open circuit voltage of the battery 4

The charged level of the battery 4 can be acquired during the operation of the propulsive electric motor 30, in addition to the case where the vehicle 1 stops. That is, the controller 60 can acquire the charged level of the battery 4 during the propulsion of the vehicle 1. The controller 60 controls the engine 10, the converter 70, and the inverter 80 such that the electric current supplied to the inverter 80 is increased or decreased based on an acceleration instruction or a deceleration instruction received from the propulsion instruction part 8 during a period for acquiring the charged level of the battery 4. At this time, as illustrated in part (c) of Fig. 1, the controller 60 controls the engine 10, the converter 70, and the inverter 80 so that the electric current I from the converter 70 flows into the inverter 80 without flowing into the battery 4.

The open circuit voltage of the battery 4 has a correlation with the charged level of the battery 4. However, the voltage of the battery 4 may vary, for example, in a certain period after the electric current flowing in the battery has changed to substantially zero in some cases. The controller 60 sets a period longer than the period from the point at which the electric current flowing into the battery changes to substantially zero to the point at which the variation of the voltage of the battery 4 lowers as the period for acquiring the charged level of the battery 4.

The vehicle 1 is driven by the propulsion unit DU that receives the supply of the electric power from the power generation unit GU and the battery 4. Specifically, the propulsive electric motor 30 of the propulsion unit DU of the vehicle 1 receives the supply of the electric current from the converter 70 of the power generation unit GU and/or the battery 4 via the inverter 80 and outputs the rotational power. The vehicle 1 advances as the propulsion system 3b receives the rotational power outputted by the propulsive electric motor 30.

The controller 60 of the vehicle 1 of the present embodiment controls the engine 10, the converter 70, and the inverter 80 so as to satisfy the following (i) and (ii).
(i) The electric current supplied to the inverter 80 increases or decreases according to an acceleration instruction or a deceleration instruction by the propulsion instruction part 8.
(ii) The electric current generated in the power generation electric motor 20 during the operation of the engine 10 and outputted from the converter 70 is increased or decreased together with the electric current inputted from the inverter 80 and supplied to the propulsive electric motor 30.

Due to this, the controller 60 performs control so that the electric current is supplied from the converter 70 to the inverter 80 without or substantially without supplying the electric current to the battery 4.

Therefore, the controller 60 prevents the electric current from flowing into the battery 4 during the operation of the engine 10 and outputs power from the propulsive electric motor 30 so as to drive the propulsion system 3b not connected to the path that transmits the power from the crankshaft 15 according to an instruction from the propulsion instruction part 8. In this situation, the controller 60 can acquire the charged level of the battery 4 based on the voltage of the battery 4. That is, the controller 60 can make the electric current of the battery 4 during the propulsion of the vehicle 1 be zero or substantially zero. Due to this, the controller 60 of the vehicle 1 can detect the open circuit voltage of the battery 4 within a certain period. The controller 60 can acquire the precise charged level based on the voltage of the battery 4.

The controller 60 controls the engine 10, the converter 70, and the inverter 80 such that both the electric current outputted from the converter 70 and the electric current supplied to the inverter 80 based on an acceleration instruction by the propulsion instruction part 8 are increased. Furthermore, the controller 60 controls the engine 10, the converter 70, and the inverter 80 such that both the electric current outputted from the converter 70 and the electric current supplied to the inverter 80 are decreased based on a deceleration instruction by the propulsion instruction part 8.

For example, the controller 60 controls the electric current amount outputted from the converter 70 to correspond with the electric current amount required for the inverter 80 to output power according to an instruction from the propulsion instruction part 8.

There are various methods for the specific control of the electric current. For example, when the converter 70 and the inverter 80 operates based on vector control (sine wave control), the electric current flowing into each of the converter 70 and the inverter 80 can be directly instructed as electric current values. When the converter 70 and the inverter 80 operates based on simple PWM control or phase control, the electric current can be indirectly instructed using a map indicating the correspondence between the control value and the electric current, or the like. Alternatively, the controller 60 may, for example, detect the electric current flowing into the converter 70 and determine the amount of input electric current in an instruction to the inverter 80 according to the detected electric current.

For example, the controller 60 equalizes or substantially equalizes the electric current increase amount in an electric current instruction provided to the converter 70 with the electric current increase amount in an electric current instruction provided to the inverter 80 based on an acceleration instruction. Furthermore, the controller 60 equalizes or substantially equalizes the electric current decrease amount in an electric current instruction provided to the converter 70 with the electric current decrease amount in an electric current instruction provided to the inverter 80 based on a deceleration instruction.

Due to this, the controller 60 makes the electric current flowing into the battery 4 substantially zero.

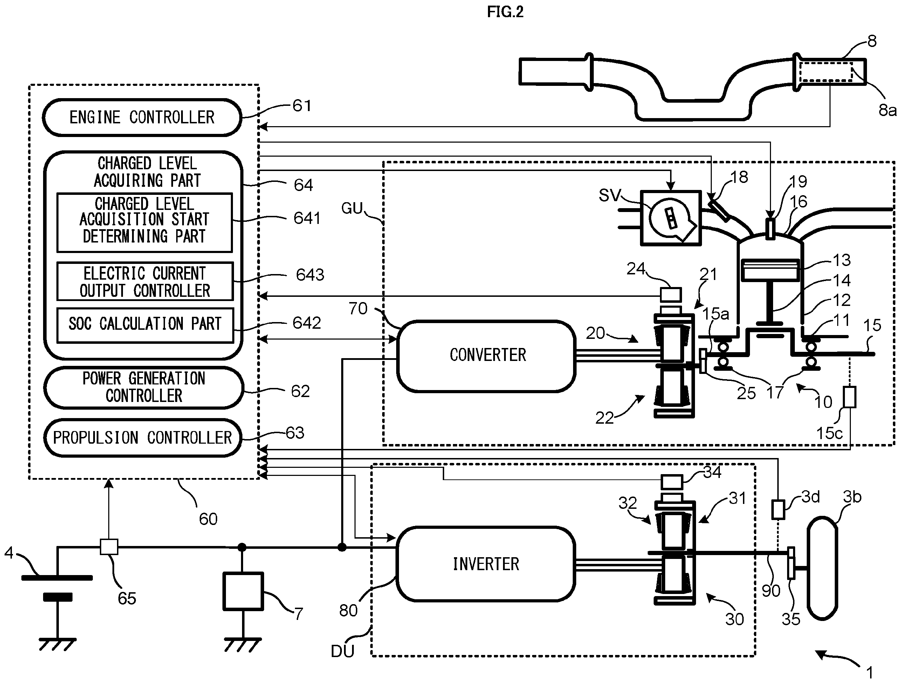

Fig. 2 is a schematic diagram indicating each relationship among main constituents of the vehicle 1 in Fig. 1.

The propulsion instruction part 8 of the vehicle 1 outputs an acceleration instruction and a deceleration instruction. The propulsion instruction part 8 is an accelerator grip for an operator to accelerate or decelerate the vehicle 1. The controller 60 controls throttle valve SV provided in the engine 10, a fuel jetting device 18, a power generation electric motor 20, and a propulsive electric motor 30 by electronic control based on the instruction from the propulsion instruction part 8. Then, the controller 60 adjusts the fuel jetting device 18 and the throttle valve SV to adjust the amount of the mixed gas supplied to the engine 10 with reference to the charged level of the battery 4.

The propulsion instruction part 8 is provided with an accelerator sensor 8a. The accelerator sensor 8a detects the operation mount of the propulsion instruction part 8 by an operator. For example, the accelerator sensor 8a is a potentiometer disposed in the propulsion instruction part 8. The accelerator sensor 8a outputs a signal according to the operation amount of the propulsion instruction part 8 by an operator. That is, the propulsion instruction part 8 outputs an acceleration instruction or a deceleration instruction including required power. The controller 60 acquires an acceleration instruction or a deceleration instruction by output signals from the accelerator sensor 8a.

The engine 10 includes a crankcase 11, a cylinder 12, a piston 13, a connecting rod 14, and a crankshaft 15. The piston 13 is disposed in a cylinder 12 in a reciprocatingly movable manner. The crankshaft 15 is rotatably disposed in the crankcase 11. The connecting rod 14 connects the piston 13 and the crankshaft 15. A cylinder head 16 is attached to the top of the cylinder 12. A combustion chamber is defined by the cylinder 12, the cylinder head 16, and the piston 13. The crankshaft 15 is supported in a rotatable manner by the crankcase 11 via a pair of bearings 17. The power generation electric motor 20 is attached to a first edge 15a of the crankshaft 15.

The engine 10 includes a throttle valve SV, a fuel jetting device 18, and an ignition plug 19. The throttle valve SV adjusts the amount of air supplied to the combustion chamber. The fuel jetting device 18 supplies fuel to the air supplied to the combustion chamber by the throttle valve SV by jetting the fuel. A mixed gas of air and fuel is supplied to the combustion chamber. The supply of the fuel by the fuel jetting device 18 and the opening degree of the throttle valve SV is adjusted based on an acceleration instruction and a deceleration instruction of the propulsion instruction part 8. The ignition plug 19 burns the air-fuel mixture supplied to the combustion chamber.

The engine 10 is an internal combustion engine. The engine 10 receives the fuel supply. The engine 10 outputs the rotational power by the combustion operation for burning the air-fuel mixture gas. The throttle valve SV and the fuel jetting device 18 adjust the rotational power outputted from the engine 10 by adjusting the supplied amount of air and fuel. The throttle valve SV and the fuel jetting device 18 function as a rotational power adjusting device that adjusts the rotational power outputted from the engine 10.

The engine 10 outputs rotational power via the crankshaft 15. The rotational power of the crankshaft 15 is converted into electric power by the power generation electric motor 20. The electric power converted by the power generation electric motor 20 is supplied to the propulsive electric motor 30 and is outputted as rotational power again. The rotational power outputted from the propulsive electric motor is transmitted to the wheels as the propulsion system 3b. In the vehicle 1, the propulsion system 3b is separated from the path transmitting the power from the crankshaft 15 of the engine 10, and therefore, the engine 10 does not directly drive the propulsion system 3b. That is, the power of the engine 10 is not directly transmitted to the propulsion system 3b.

For example, the engine 10 of this embodiment is a single cylinder four-stroke engine. That is, the engine 10 positively rotates the crankshaft 15 while repeating the following four strokes: an intake stroke, a compression stroke, an expansion stroke, and an exhaust stroke. The engine 10 according to the present embodiment is an air-cooled engine.

The power generation electric motor 20 of the power generation unit GU is a permanent magnet three-phase brushless-type power generator. The power generation electric motor 20 includes a rotor 21 and a stator 22. The power generation electric motor 20 in the present embodiment is a radial gap motor. The power generation electric motor 20 is an outer rotor motor. That is, the rotor 21 is an outer rotor. The stator 22 is an inner stator.

The rotor position detection device 24 is a device that detects the position of the rotor 21.

In the present embodiment, the power generation electric motor 20 is connected to the crankshaft 15 via or not via power transmission device 25 such as a speed-variable transmission or a clutch. The power generation electric motor 20 is connected to the crankshaft 15 of the engine 10 so as to operate in conjunction with the crankshaft 15. Specifically, the rotor 21 is connected to the crankshaft 15 so as to rotate at a fixed speed ratio in relation to the crankshaft 15. The power generation electric motor 20 is driven by the engine 10 and generates electric power when the engine 10 performs combustion operation. Specifically, the piston 13 of the engine 10 is moved vertically by the combustion operation and rotates the crankshaft 15. The power generation electric motor 20 generates electric power by the rotor 21 rotating around the stator 22 linking with the crankshaft 15.

The propulsive electric motor 30 of the propulsion unit DU is a permanent magnet three-phase brushless motor. The propulsive electric motor 30 includes a rotor 31 and a stator 32. The propulsive electric motor 30 in this embodiment is a radial gap motor. The propulsive electric motor 30 is an outer rotor motor. That is, the rotor 31 is an outer rotor. The stator 32 is an inner stator. The rotation axis of the propulsive electric motor 30 is placed in a direction orthogonal to the vehicle traveling direction. The tip part of the rotating shaft of the propulsive electric motor 30 is connected to a driving shaft 90 disposed in parallel with the rotation shaft of the propulsive electric motor 30.

The propulsive electric motor 30 is operated by the electric power supplied from the power generation electric motor 20 and/or the battery 4. When the electric current outputted by the power generation electric motor 20 increases, the electric current supplied from the converter 70 to the inverter 80 increases, and the electric current supplied to the propulsive electric motor 30 increases. The electric power outputted by the power generation electric motor 20 is supplied to the propulsive electric motor 30 via a converter 70 and an inverter 80.

The propulsion system 3b of the propulsion unit DU includes a driving shaft 90. The driving shaft 90 transmits rotational power to an axle of the propulsion system 3b. The driving shaft 90 is directly or indirectly connected to the propulsive electric motor 30 such that the rotational power is transmitted to the propulsion system 3b via the propulsive electric motor 30. Specifically, the rotor 31 of the propulsive electric motor 30 is connected to the driving shaft 90 directly or via a power transmission device 35. The propulsion system 3b is rotatably driven by the propulsive electric motor 30. Due to this operation, the propulsive electric motor 30 runs the vehicle 1. Regarding the power transmission, the propulsive electric motor 30 is not mechanically connected to the engine 10 and the power generation electric motor 20.

A vehicle speed sensor 3d is disposed on the driving shaft 90 of the propulsion system 3b. The vehicle speed sensor 3d outputs signals of frequencies corresponding to the rotation speed of the driving shaft 90. The controller 60 calculates a vehicle speed based on the output signal from the vehicle speed sensor 3d.

The power generation electric motor 20 and battery 4 are connected to the converter 70. The battery 4 sends an electric current to and receives an electric current from the power generation electric motor 20. The converter 70 includes a plurality of switching parts (not illustrated). Each of the switching parts has a switching element. For example, the switching element is a transistor. More specifically, the switching part is a FET (Field Effect Transistor). The switching parts constitute a three-phase bridge inverter.

An electric current sensor (not illustrated) is disposed on a line connecting the converter 70 and the power generation electric motor 20 and detects the electric current of the two phases in the power generation electric motor 20.

The propulsive electric motor 30, the converter 70, and the battery 4 are connected to the inverter 80. The battery 4 supplies the storage electric power to the propulsive electric motor 30. The inverter 80 includes a plurality of switching parts (not illustrated). Each of the switching parts has a switching element. For example, the switching element is a transistor. More specifically, the switching part is a FET (Field Effect Transistor).

An electric current sensor (not illustrated) is disposed on a line connecting the inverter 80 and the propulsive electric motor 30 and detects the electric current of the two phases in the propulsive electric motor 30.

The headlight 7 is connected to the battery 4. The headlight 7 is an auxiliary machine operating while consuming electric power and mounted on the vehicle 1. An electric current and voltage sensor 65 is disposed on lines connecting a battery, which is the battery 4, and the converter 70 and the inverter 80. The electric current and voltage sensor 65 detects the electric current flown into the battery, which is the battery 4, and the voltage. The electric current and voltage sensor 65 is disposed between the branch point to the headlight 7 and the battery 4 out of the lines connecting the battery 4 to the converter 70 and the inverter 80.

The controller 60 includes an engine controller 61, a power generation controller 62, a propulsion controller 63, and a charged level acquiring part 64.

The throttle valve SV, the fuel jetting device 18, and the ignition plug 19 are connected to the engine controller 61. The engine controller 61 controls the combustion operation of the engine 10 by controlling the throttle valve SV, the ignition plug 19, and the fuel jetting device 18. The engine controller 61 controls the rotational power of the engine 10 by controlling the combustion operation of the engine 10.

The power generation controller 62 controls the converter 70 to control the operation of the power generation electric motor 20.

The propulsion controller 63 controls the electric current and the voltage supplied from the inverter 80 to the propulsive electric motor 30 based on required power included in an acceleration instruction and a deceleration instruction of the propulsion instruction part 8 such that the propulsive electric motor 30 can output the required power.

The charged level acquiring part 64 acquires the charged level of the battery 4. The charged level acquiring part 64 includes a charged level acquisition start determining part 641, an SOC calculation part 642, and an electric current output controller 643.

For example, the charged level acquisition start determining part 641 periodically acquires the charged level of a battery. The charged level acquisition start determining part 641 determines whether to start the operation for acquiring the charged level of the battery. Specifically, the charged level acquisition start determining part 641 determines whether to start acquiring the charged level of the battery 4 by determining whether a certain period has passed after the last acquisition of the charged level of the battery 4. The charged level acquisition start determining part 641 causes the controller 60 to start acquiring the charged level when a certain period has passed after the acquisition of the charged level of the battery 4. In contrast, the charged level acquisition start determining part 641 does not allow the controller 60 to start calculating the charged level if a certain period has not passed after the calculation of the charged level of the battery 4.

The SOC calculation part 642 calculates the SOC of the battery 4 in order to acquire the charged level of the battery 4. The SOC of the battery 4 is calculated from the open circuit voltage of the battery. The open circuit voltage of a battery 4 is a terminal voltage of the battery at the time when the battery electric current is zero. The SOC of the battery 4 is obtained by calculating the value corresponding to the detected open circuit voltage of the battery from remaining battery capacity-open circuit voltage performance inherent in the battery.

The electric current output controller 643 controls the output electric current of the converter 70 to correspond with electric current variation of the inverter 80 such that the variation amount of output electric current of the converter 70 is equal to or substantially equal to the variation amount of input electric current of the inverter 80. Due to this, the electric current from the converter 70 flows into the inverter 80 without flowing into the battery 4. Thus, the battery electric current of the battery 4 becomes substantially zero, and therefore, the SOC calculation part 642 can detect the open circuit voltage of the battery 4.

The controller 60 is constituted of a computer having a central processing unit (not illustrated) and a storage device (not illustrated). The central processing unit performs arithmetic processing based on a control program. The storage device stores data relating to programs and arithmetic operations.

The engine controller 61, the power generation controller 62, the propulsion controller 63, and charged level acquiring part 64 are implemented by a computer (not illustrated) and control programs executed in the computer. Accordingly, the operations performed by each of the engine controller 61, the power generation controller 62, the propulsion controller 63, and the charged level acquiring part 64 described below can be referred to as the operation of the controller 60. Note that the engine controller 61, the power generation controller 62, the propulsion controller 63, and the charged level acquiring part 64 are electrically connected and, for example, may be configured as mutually independent devices placed in mutually separated positions or may be configured integrally.

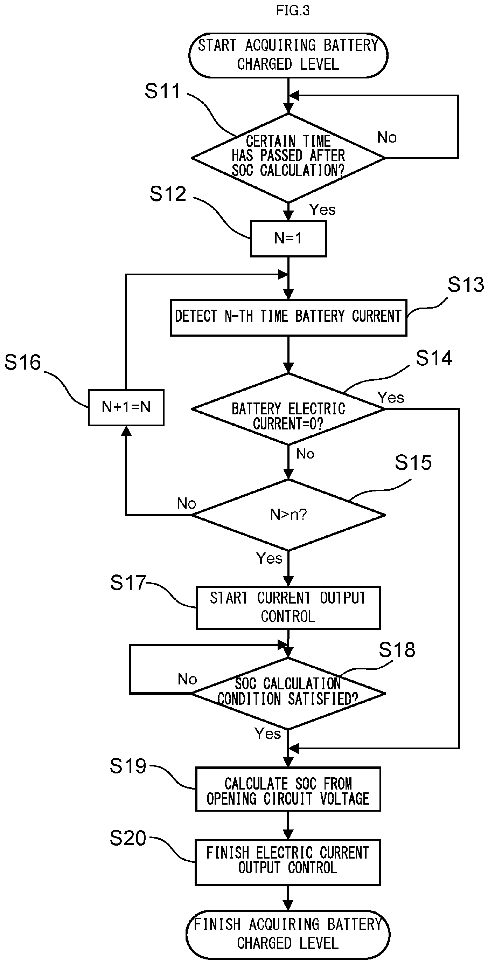

Next, the operation for calculating the charged level of the battery 4 by the controller 60 on the vehicle 1 will be described in detail. Fig. 3 is a flowchart indicating the operation for detecting the charged level of the battery 4 by the controller 60 on the vehicle 1.

The charged level of the battery 4 is detected by the controller 60 of the vehicle 1 both when the vehicle 1 stops and when the vehicle 1 is being propelled. First, in step S11, the charged level acquisition start determining part 641 determines whether a certain period has passed after the last detection of the charged level of the battery 4. The charged level of the battery is periodically detected at regular intervals. Due to this, the vehicle 1 periodically monitors the battery state.

If the charged level acquisition start determining part 641 determines that a certain period has not passed after the last detection of the charged level of the battery 4 in step S11, the operation returns to S11 again, and the charged level acquisition start determining part 641 determines whether a certain period has passed after the last detection of the charged level of the battery 4.

If the charged level acquisition start determining part 641 determines that a certain period has passed after the last detection of the charged level of the battery 4 in step S11, the SOC calculation part 642 detects the battery electric current of the battery 4 at least once. If the battery electric current of the battery 4 is zero, the SOC calculation part 642 can detect the open circuit voltage of the battery 4. Due to this, the SOC of the battery 4 can be calculated.

Specifically, the SOC calculation part 642 first sets the number N of detection times of the battery electric current to 1 in step S12. The SOC calculation part 642 detects the N-th time battery electric current in step S13. After that, the SOC calculation part 642 determines whether the battery electric current is zero or not in step S14. For example, when the vehicle 1 stops, the engine 10 and the propulsive electric motor 30 also stop. At this time, the operation of the engine 10 of the vehicle 1 stops, and the operation of the propulsive electric motor also stops. Thus, the electric current is not sent or received between the converter 70 and the inverter 80. Accordingly, the SOC calculation part 642 detects that the battery electric current of the battery 4 is zero at this time. If the battery electric current is determined as zero in step S14, the operation proceeds to step S19, and the SOC calculation part 642 calculates the SOC of the battery 4 from the open circuit voltage of the battery 4.

If the battery electric current is determined as other than zero in step S14, the operation proceeds to step S15, and the SOC calculation part 642 determines whether the number N of detection times of the battery electric current exceeds the predetermined times n. For example, the vehicle 1 is in a long-term propulsion state, that engine 10 and the propulsive electric motor 30 are not in a stopped state, and therefore, the battery electric current of the battery 4 does not become zero. At this time, even if the battery electric current is detected multiple times, the battery electric current does not become zero and the open circuit voltage of the battery 4 cannot be measured. In this case, the SOC calculation part 642 produces a state where the battery electric current can be made substantially zero from steps S17 to S20 as described below and calculates the SOC of the battery 4 by detecting the open circuit voltage of the battery 4.

If the number N of the detection times of the battery electric current is determined as not exceeding the predetermined detection times n in step S15, the SOC calculation part 642 sets the number (N+1), adding 1 to the number N of detection times of the battery electric current, as a new number N of detection times of the battery electric current in step S16. After that, the operation returns to step S13 again, and the SOC calculation part 642 detects the N-th time battery electric current.

If the number N of the detection times of the battery electric current is determined as exceeding the predetermined times n in step S15, the electric current output controller 643 produces the state where the battery electric current can be made substantially zero and calculates the SOC of the battery 4 by detecting the open circuit voltage of the battery 4. Specifically, the controller 60 controls, in step S17, the converter 70 and the inverter 80 such that both the electric current outputted from the converter 70 and the electric current supplied to the inverter 80 based on an acceleration instruction by the propulsion instruction part 8 are increased. Furthermore, the controller 60 controls the converter 70 and the inverter 80 such that both the electric current outputted from the converter 70 and the electric current supplied to the inverter 80 are decreased based on a deceleration instruction by the propulsion instruction part 8. More specifically, the electric current output controller 643 controls the electric current output to fit the output electric current from converter 70 with the input electric current to the inverter 80. Due to the electric current output control of the output electric current from the converter 70 by the electric current output controller 643, the electric current from the converter 70 flows into the inverter 80 without flowing into the battery 4. Thus, the battery electric current of the battery 4 becomes substantially zero, and therefore, the SOC calculation part 642 can detect the open circuit voltage of the battery 4.

In step S18, the SOC calculation part 642 determines whether or not the calculation conditions of the SOC of the battery 4 is satisfied. The calculation condition of the SOC refers to a case where the battery electric current is maintained to be zero during a certain period. If the calculation condition of the SOC of the battery 4 is determined as not satisfied in step S18, the operation returns to step S18 again, and the SOC calculation part 642 determines whether or not the calculation condition of the SOC of the battery 4 is satisfied. If the calculation condition of the SOC of the battery 4 is determined as satisfied in step S18, the operation proceeds to step S19, and the SOC calculation part 642 detects the open circuit voltage of the battery 4 and calculates the SOC of the battery 4.

After the SOC of the battery 4 is calculated in step S19, the electric current output controller 643 finishes the electric current output control of the output electric current from the converter 70 in step S20.

Next, a first example of the electric current output control for controlling the output electric current from the converter 70 in parallel with the controls from steps S17 to S20 will be described.

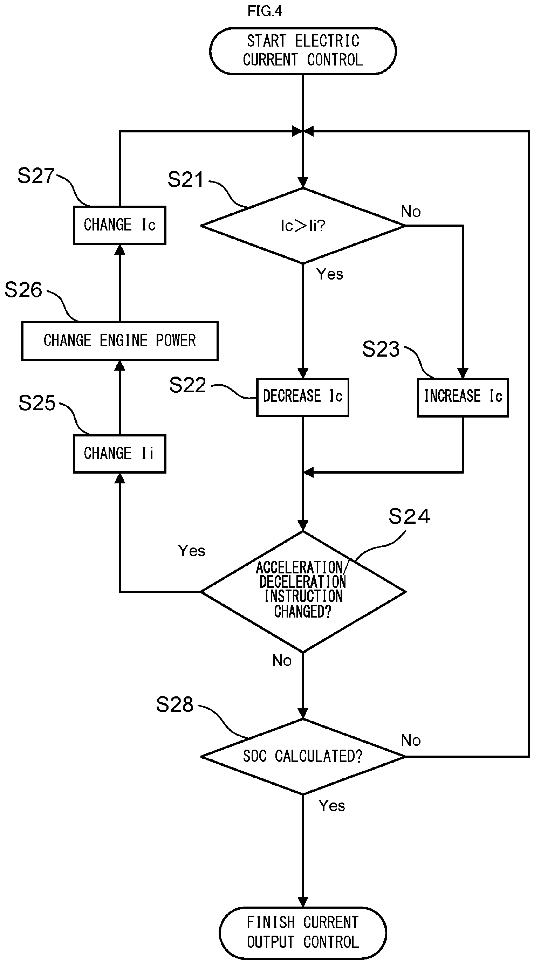

Fig. 4 is a flowchart indicating the detailed operation of the electric current output control by the controller 60 on the vehicle 1 according to this first example. The electric current output control in Fig. 4 starts with the operation in step S17 in Fig. 3 as a trigger.

First, the electric current output controller 643 starts the electric current output control of the output electric current from the converter 70, then controls the output electric current Ic of the converter 70 to correspond with the electric current variation of the inverter 80 such that the variation amount of output electric current Ic of the converter 70 is equal to or substantially equal to the variation amount of input electric current Ii of the inverter 80. First, the electric current output controller 643 starts the electric current output control of the output electric current from the converter 70, then controls the output electric current Ic of the converter 70 to correspond with the electric current variation of the inverter 80 such that the output electric current Ic of the converter 70 is equal to the input electric current Ii of the inverter 80.

Specifically, the electric current output controller 643 determines whether the output electric current Ic of the converter 70 is larger than the input electric current Ii of the inverter 80 in step S21. If the output electric current Ic of the converter 70 is determined as larger than the input electric current Ii of the inverter 80 in step S21, the operation proceeds to step S22, and the electric current output controller 643 controls the converter 70 such that the output electric current Ic of the converter 70 decreases. If the output electric current Ic of the converter 70 is determined as smaller than the input electric current Ii of the inverter 80 in step S21, the operation proceeds to step S23, and the electric current output controller 643 controls the converter 70 such that the output electric current Ic of the converter 70 increases.

Next, the engine controller 61 determines whether the acceleration instruction or the deceleration instruction from the propulsion instruction part 8 has been changed in step S24. The engine controller 61 also determines whether the required power included in the acceleration instruction or the deceleration instruction has been changed. For example, the change of an acceleration instruction or a deceleration instruction is detected by the engine controller 61 receiving signals from the propulsion instruction part 8. If it is determined that the required power has been changed by an acceleration instruction or a deceleration instruction from the propulsion instruction part 8 made by an operator of the vehicle 1 in step S24, the operation proceeds to step S25, and the propulsion controller 63 controls the inverter 80 so as to change the input electric current Ii to the inverter 80. The input electric current Ii of the inverter 80 is increased or decreased so as to be an electric current required for the propulsive electric motor 30 to output target power.

After changing the input electric current Ii to the inverter 80 in step S25, the operation proceeds to step S26, and the engine controller 61 changes the power of the engine 10. Specifically, the engine controller 61 changes the power of the engine 10 by changing at least either one of the opening degree of the throttle valve SV and the fuel jetting amount from the fuel jetting device 18 based on target power. The power of the engine 10 is increased or decreased with a goal of required power included in an acceleration instruction or a deceleration instruction.

After the engine controller 61 changes the power of the engine 10 in step S26, the operation proceeds to step S27, and the electric current output controller 633 controls the converter 70 such that the output electric current Ic from the converter 70 is changed. The output electric current Ic of the converter 70 is increased or decreased so as to correspond with the variation of the input electric current Ii of the inverter 80.

After the electric current output controller 633 changes the output electric current Ic from the converter 70 in step S27, the operation returns to step S21 again. The electric current output controller 643 controls the output electric current Ic of the converter 70 in steps S21 to S23 again such that the output electric current Ic of the converter 70 is equal to or substantially equal to the variation of input electric current Ii of the inverter 80. The output electric current Ic of the converter 70 corresponds with the variation of the input electric current Ii of the inverter 80.

If it is determined that the acceleration instruction or the deceleration instruction is not changed in step S24., the operation proceeds to step S28, and the electric current output controller 643 determines whether the SOC of the battery 4 has been calculated. If it is determined that the SOC of the battery 4 has been calculated in step S28, the electric current output controller 643 finishes the electric current output control of the output electric current from the converter 70. If it is determined that the SOC of the battery 4 has not been calculated in step S28, the operation returns to step S21 again, and the electric current output controller 643 determines whether the output electric current Ic of the converter 70 is larger than the input electric current Ii of the inverter 80.

Next, according to this first embodiment of the invention, a second example of the electric current output control for controlling the output electric current from the converter is described. In this second example, after starting the electric current output control of the output electric current to the converter 70, the controller 60 increases the engine rotation speed of the engine 10. The controller 60 can increase the margin output of the engine 10 by increasing the engine rotation speed of the engine 10 before an acceleration operation by an operator of the vehicle 1. Due to this, the propulsive electric motor 30 driven by the electric power supplied from the power generation electric motor 20 can output target power according to an acceleration operation propulsion, by an acceleration instruction as a trigger, when the propulsion instruction part 8 outputs the acceleration instruction. That is, the propulsive electric motor 30 can output target power without outputting the electric current from the battery 4. Accordingly, the vehicle 1 can acquire the charged level of the battery 4 even responding to an acceleration instruction that normally requires the output of the electric current from the battery 4. Furthermore, reproducibility of responsiveness of acceleration of the series hybrid vehicle to an acceleration operation is shown even during acquiring the charged level of the battery 4.

The engine rotation speed of the engine 10 is increased by changing the load torque of the power generation electric motor 20 without changing the power of the engine 10.

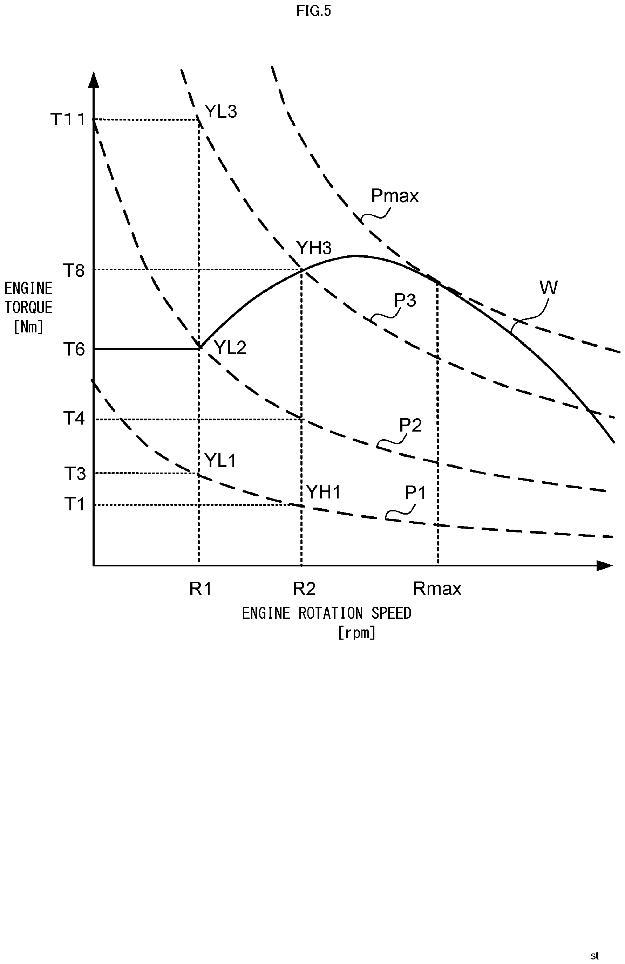

The margin output will now be described with reference to Fig. 5. Fig. 5 is a diagram for explaining a margin output of the engine. In the graph of Fig. 5, the vertical axis represents engine torque, and the horizontal axis represents engine rotation speed. The power is proportional to a product of an engine rotation speed and engine torque.

The margin output refers to a difference between engine power determined from a certain engine rotation speed and certain engine torque and a maximum rotational power outputted from the engine at the same engine rotation speed as the above engine rotation speed. That is, a margin output means the power outputtable according to the opening degree of the throttle valve and/or the fuel jetting amount without waiting for the rise of the engine rotation speed.

For example, the engine rotation speed is R2 [rpm] and the engine torque is T1 [Nm] (operating point YH1) at the operating point YH1 of the engine 10 at a certain opening degree of the throttle valve SV. At this time, the engine torque increases to T8 [Nm] (operating point YH3) when the opening degree of the throttle valve SV is maximized while the engine rotation speed is kept to R2 [rpm]. Accordingly, the engine margin output at this time is P3 - P1, obtained by subtracting P1 (= T1 × R2 × a) [W] from P3 (= T8 × R2 × a) [W]. The value P3 - P1 is (T8-T1) × R2 × a [W] (wherein α is a constant that serves as a correction value from [rpm] × [Nm] to [W]).

Here, the margin output of the engine differs depending on the engine rotation speed. The margin output tends to be smaller as the engine rotation speed is lower at least in an engine rotation speed region not larger than the engine maximum output rotation speed Rmax at which the engine generates the maximum output Pmax. This is because the engine power at the maximum opening of the throttle valve is restricted by the curve W indicating the Wide-Open-Throttle (hereinafter referred to as WOT) curve in Fig. 5. A WOT curve is a curve representing a relationship between the engine rotation speed and the engine torque that can be outputted by the engine itself when the throttle valve is fully opened, and the fuel supply is maximized. In a certain running state (at a certain engine rotation speed), the engine torque cannot exceed the WOT curve even if the throttle valve is fully opened and the fuel supply is maximized. The WOT curve is a unique characteristic that each individual engine has. Also, in the description hereinbelow, cases where the engine rotation speed is not larger than the engine maximum output rotation speed Rmax will be described.

For example, an operating point, at which the engine rotation speed is R1 [rpm] and the engine torque is T3 [Nm] under a certain engine condition, is taken as an operating point YL1. Then, an operating point, at which the engine rotation speed is R2 [rpm] and the engine torque is T1 [Nm], is taken as an operating point YH1. At this time, the engine power at the operating point YL1 and the engine power at the operating point YH1 are both P1[W] (represented by the dotted line P1 in Fig. 2). The dotted line indicated as P1 represents a combination of speeds and torque when the power P1 is obtained. The dotted line indicated as P1 is an equal output line. The dotted lines indicated as P2 and P3 are equal output lines when power different from the power P1 is obtained.

When the throttle valve is fully opened at the operating point YH1, the engine power rises from P1 to P3 (operating point YH3). On the contrary, when the throttle valve SV is fully opened at the operating point YL1, the power outputted by the engine 10 hits a peak at P2 overlapping with the WOT curve W (operating point YL2). At this time, the engine torque hits a peak at T6. Accordingly, the power of the engine 10 does not rise at the operating point YL1 as high as at the operating point YH1. Accordingly, the responsiveness of the increase of the power to an acceleration instruction of the propulsion instruction part 8 unfortunately lowers.

For this reason, under the two different conditions of low rotation/high load (high throttle valve opening degree) and high rotation/low load (low throttle valve opened degree), the former has a greater engine margin output than the latter when mutually equal power is outputted. Thus, the power outputtable according to the opening degree of the throttle valve and/or the fuel jetting amount without waiting for the rise of the engine rotation speed is larger in the former than in the latter. That is, the responsiveness of acceleration operation when the engine rotation speed is low is not as high as the responsiveness of the acceleration operation when the engine rotation speed is high.

The vehicle 1 of the present embodiment converts the power outputted from the engine 10 into electric power by the power generation electric motor 20. The vehicle 1 supplies electric power converted by the power generation electric motor 20 to the propulsive electric motor 30 together with the electric power charged in the battery 4. In the vehicle 1, the engine margin output is small, and therefore, the electric power outputtable from the power generation electric motor 20 is also small when an acceleration instruction is outputted by the propulsion instruction part 8 in a state where the engine rotation speed is low. The power outputted from the propulsive electric motor 30 is increased when a shortage of the electric power supplied from the power generation electric motor 20 to the propulsive electric motor 30 is supplied from the battery 4. Therefore, the responsiveness of acceleration of the vehicle 1 to an acceleration instruction increases.

However, the charged level cannot be acquired during the period in which the electric current is outputted from the battery 4. This is because the controller 60 is required during acquiring the charged level of the battery 4 to make the electric current supplied from the battery 4 be substantially zero in order to acquire the open circuit voltage of the battery 4. If the electric current of the battery 4 is forced to be zero, the electric power is not supplied from the battery 4 to the propulsive electric motor 30, and therefore, only the electric power generated by the power generation electric motor 20 is supplied to the propulsive electric motor 30. Accordingly, the electric power supplied to the propulsive electric motor 30 becomes in short supply. Thus, it is impossible to have reproducibility on the response of an acceleration operation when the engine rotation speed is low.

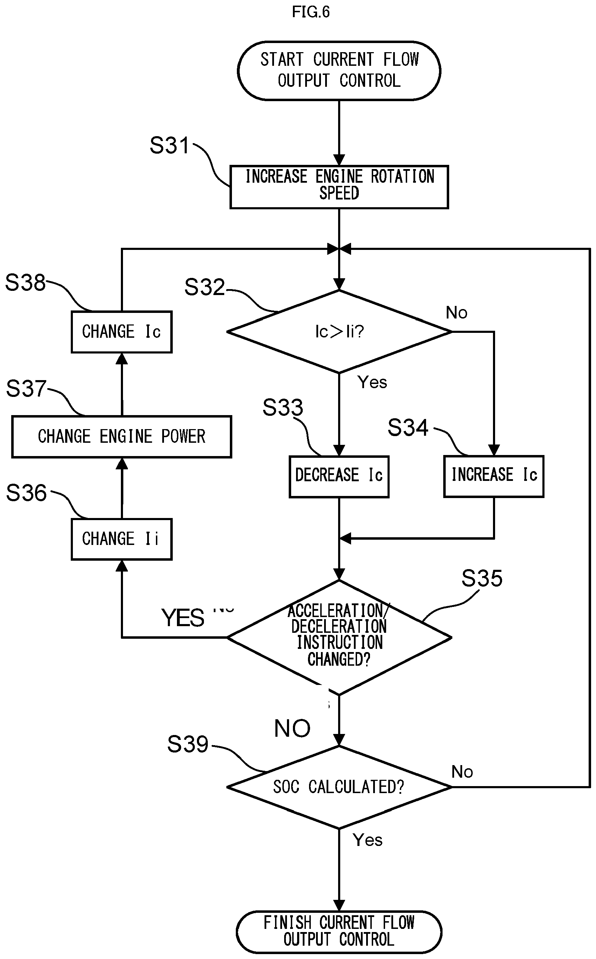

In the vehicle 1 of the present embodiment, the controller 60 performs the operations indicated in the flowchart illustrated in Fig. 6.

Fig. 6 is a flowchart indicating the detailed operation of the electric current output control of the output electric current from the converter 70 made by the controller 60 of the vehicle 1 in the present embodiment.

The controller 60 changes an engine rotation speed of the engine 10 before an acceleration instruction such that target power according to the acceleration instruction is outputted, by the acceleration instruction as a trigger, from the propulsive electric motor 30 driven by electric power supplied from the power generation electric motor 20. The controller 60 changes the engine rotation speed of the engine 10 by changing the load torque of the power generation electric motor 20 to the engine 10.

Specifically, after starting the electric current output control of the output electric current from the converter 70, the controller 60 first increases the engine rotation speed of the engine 10. More specifically, the power generation controller 62 of the controller 60 controls the converter 70 so as to reduce the rotation load of the power generation electric motor 20 in step S31. Due to this step, the engine 10 can increase the engine rotation speed without changing the output power. Accordingly, the variation of the electric power outputted from the power generation electric motor 20 can also be suppressed.

For example, when the engine rotation speed of the engine 10 is increased to the engine maximum output rotation speed Rmax at the engine maximum output, the engine 10 can instantly raise the power to the maximum output without waiting for the further rise of the rotation speed in a state where the throttle valve is fully opened.

Next, the electric current output controller 643 controls the output electric current Ic of the converter 70 to correspond with the electric current variation of the inverter 80 such that the output electric current Ic of the converter 70 is equal to the input electric current Ii of the inverter 80. Specifically, the electric current output controller 643 determines whether the output electric current Ic of the converter 70 is larger than the input electric current Ii of the inverter 80 in step S32. If the output electric current Ic of the converter 70 is determined as larger than the input electric current Ii of the inverter 80 in step S32, the operation proceeds to step S33, and the electric current output controller 643 controls the converter 70 such that the output electric current Ic of the converter 70 decreases. If the output electric current Ic of the converter 70 is determined as smaller than the input electric current Ii of the inverter 80 in step S32, the operation proceeds to step S34, and the electric current output controller 643 controls the converter 70 such that the output electric current Ic of the converter 70 increases.

Next, the engine controller 61 determines whether the acceleration instruction or the deceleration instruction from the propulsion instruction part 8 has been changed in step S35. The engine controller 61 also determines whether the required power included in the acceleration instruction or the deceleration instruction has been changed. If it is determined that the required power has been changed by an acceleration instruction or a deceleration instruction, the operation proceeds to step S36, and the propulsion controller 63 controls the inverter 80 so as to change the input electric current Ii to the inverter 80. The input electric current Ii of the inverter 80 is increased or decreased so as to be the electric current required for outputting the required power based on an instruction of the propulsion instruction part 8 by the propulsive electric motor 30 to output target power.

After changing the input electric current Ii to the inverter 80 in step S36, the operation proceeds to step S37, and the engine controller 61 changes the engine power of the engine 10. Specifically, the engine controller 61 increases the engine power by changing at least either one of the opening degree of the throttle valve SV and the fuel jetting amount from the fuel jetting device 18 based on an instruction from the propulsion instruction part 8. The power of the engine 10 is increased or decreased with a goal of required power included in an acceleration instruction or a deceleration instruction of the propulsion instruction part 8.

The vehicle 1 of the present embodiment can increase the margin output by increasing the engine rotation speed of the engine 10. Due to this, the propulsive electric motor 30 driven by the electric power supplied from the power generation electric motor 20 can output power corresponding to the target power according to an acceleration operation, by an acceleration instruction as a trigger, without waiting for the rise of the rotation speed of the engine 10 when an operator of the vehicle 1 makes an acceleration operation via the propulsion instruction part 8. Thus, the vehicle 1 of the present embodiment makes the response of acceleration operation to have reproducibility.

In addition, the vehicle 1 of the embodiment increases the margin output in advance by rising the engine rotation speed of the engine 10. Thus, frequencies that can respond by the variation of the electric current supplied from the power generation electric motor 20 in response to a subsequent acceleration instruction associated with a great change amount increase. That is, frequencies that can suppress the electric current outputted from the battery 4 in response to an acceleration instruction associated with a great change amount increase. Accordingly, in the vehicle 1 of the embodiment, the precise battery charged level can be acquired with higher frequency.

In addition, the vehicle 1 of the embodiment increases the rotation speed by reducing the rotation load of the power generation electric motor 20 when the margin output is increased. In this case, the variation of the electric power outputted from the power generation electric motor 20 can be suppressed.

Accordingly, even when the rotation speed increases, the charge and discharge amount with respect to the battery 4 does not substantially change. Accordingly, when the rotation speed increases, for example, the battery 4 becomes fully charged, and the possibility of deterioration of the battery 4 can be reduced. For this reason, the capacity increase of the battery 4 disposed in the vehicle 1 can be suppressed. That is, according to the vehicle 1 of the present embodiment, the precise battery charged level can be acquired with higher frequency by increasing the margin output while suppressing the increase in size of the battery 4.

After the engine controller 61 changes the power of the engine 10 in step S37, the operation proceeds to step S38, and the electric current output controller 633 controls the converter 70 such that the output electric current Ic from the converter 70 is changed. The output electric current Ic of the converter 70 is increased or decreased so as to correspond with the variation of the input electric current Ii of the inverter 80.

After the electric current output controller 633 changes the output electric current Ic from the converter 70 in step S38, the operation returns to step S32 again. The electric current output controller 643 controls the output electric current Ic of the converter 70 to correspond with the electric current variation of the inverter 80 such that the variation amount of output electric current Ic of the converter 70 is equal to or substantially equal to the variation of input electric current Ii of the inverter 80 in steps S32 to S34 again.

If it is determined that the acceleration instruction, the deceleration instruction, or the required power of the propulsion instruction part 8 by an operator of the vehicle 1 is not changed in step S35, the electric current output controller 643 determines whether the SOC of the battery 4 has been calculated in step S39. If it is determined that the SOC of the battery 4 has been calculated in step S39, the electric current output controller 643 finishes the electric current output control of the output electric current from the converter 70. If it is determined that the SOC of the battery 4 has not been calculated in step S39, the operation proceeds to step S32 again, and the electric current output controller 643 determines whether the output electric current Ic of the converter 70 is larger than the input electric current Ii of the inverter 80.

### [Example]

In an example not falling within the subject-matter for which protection is sought, the electric current output control for controlling the output electric current from the converter 70 from steps S17 to S20 in the first embodiment is different. In the present example, after starting the electric current output control of the output electric current from the converter 70, the controller 60 operates the engine 10 on the minimum fuel consumption rate curve when an operator of the vehicle 1 makes an acceleration operation or a deceleration operation. The controller 60 can accelerate or decelerate the vehicle 1 while reducing the fuel consumption of the engine 10 during acquiring the charged level of the battery 4 by operating the engine 10 on the minimum fuel consumption rate curve.

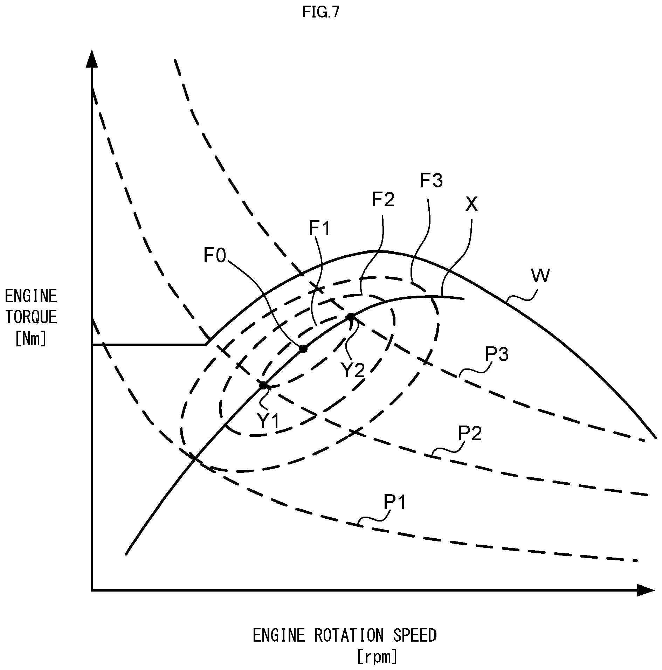

Fig. 7 is a diagram for explaining a minimum fuel consumption rate curve. In the graph of Fig. 7, the vertical axis represents the engine torque of the engine 10, and the horizontal axis represents the engine rotation speed of the engine 10.

The curve W in Fig. 7 is a WOT curve. The dotted closed curves F1, F2, and F3 in Fig. 7 are fuel consumption rate contour lines. A fuel consumption rate contour line is a line connecting the points at which the fuel consumption rates are equal with respect to the engine operating points based on the engine torque and the engine rotation speed. Each point on the same fuel consumption contour rate line has the same fuel consumption rate. A fuel consumption rate is smaller in the area surrounded by the fuel consumption rate contour lines than outside the area. In the graph of Fig. 7, the fuel consumption rate becomes minimum at the point F0 in the closed curve F1. The point F0 is a point representing the minimum fuel consumption rate, that is, an operating point at which the fuel consumption rate is smallest in the engine 10. Accordingly, the engine 10 is most efficient when operated at the point F0. The fuel consumption rate becomes higher as the fuel consumption rate contour line spreads from the closed curve F1 to F2, and further to F3. Accordingly, the efficiency of the engine 10 lowers as the operating point of the engine 10 spreads to the closed curve F2, further to F3.

The curve X in Fig. 7 is a minimum fuel consumption rate curve of the engine 10. The curve X is a group of operating points indicating the correspondence between the engine torque and the engine rotation speed for driving the engine 10 at the minimum fuel consumption rate. The minimum fuel consumption rate curve is constituted of operating points in a condition for obtaining the minimum fuel consumption amount for outputting a desired power. That is, the minimum fuel consumption rate curve is a group of points indicating minimum fuel consumption amounts obtained by optimizing the condition excluding the power at each power. Accordingly, the curve X passes through a point F0, which indicates a minimum fuel consumption rate on the minimum fuel consumption rate curve. In addition, for example, the operating point Y1 in Fig. 7 is an operating point at which the fuel consumption rate is minimum when the power of the engine 10 is P2. The operating point Y2 in Fig. 7 is an operating point at which the fuel consumption is minimum when the power of the engine 10 is P3.

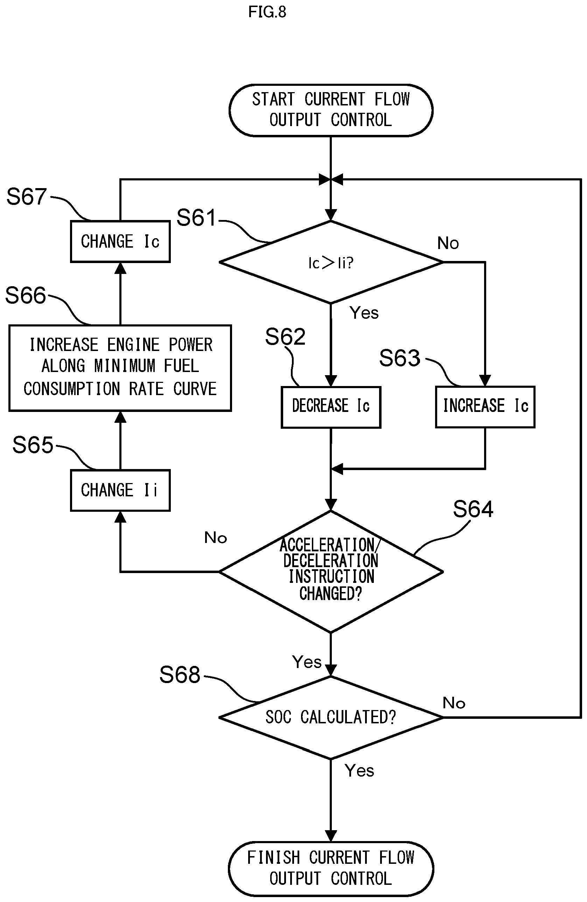

Fig. 8 is a flowchart indicating the detailed operation of the electric current output control of the output electric current to the converter 70 made by the controller 60 of the vehicle 1 in the present example. First, the electric current output controller 643 controls the output electric current Ic of the converter 70 to correspond with the electric current variation of the inverter 80 such that the variation amount of output electric current Ic of the converter 70 is equal to or substantially equal to the variation amount of input electric current Ii of the inverter 80. Specifically, the electric current output controller 643 determines whether the output electric current Ic of the converter 70 is larger than the input electric current Ii of the inverter 80 in step S61. If the output electric current Ic of the converter 70 is determined as larger than the input electric current Ii of the inverter 80 in step S61, the operation proceeds to step S62, and the electric current output controller 643 controls the converter 70 such that the output electric current Ic of the converter 70 decreases. If the output electric current Ic of the converter 70 is determined as smaller than the input electric current Ii of the inverter 80 in step S61, the operation proceeds to step S63, and the electric current output controller 643 controls the converter 70 such that the output electric current Ic of the converter 70 increases.

Next, the engine controller 61 determines whether the acceleration instruction or the deceleration instruction from the propulsion instruction part 8 has been changed in step S64. The engine controller 61 also determines whether the required power included in the acceleration instruction or the deceleration instruction has been changed. If it is determined that the acceleration instruction, the deceleration instruction, or the required power is changed, the propulsion controller 63 controls the inverter 80 so as to change the input electric current Ii to the inverter 80 in step S65. The input electric current Ii of the inverter 80 is increased or decreased so as to be the electric current required for outputting target power according to the required power including the acceleration or the deceleration by the propulsion instruction part 8.

After changing the input electric current Ii to the inverter 80 in step S65, the operation proceeds to step S66, and the engine controller 61 raises the engine power of engine 10 along the curve X indicating the minimum fuel consumption rate curve. Specifically, the engine controller 61 changes at least either one of the opening degree of the throttle valve SV and the fuel jetting amount from the fuel jetting device 18 based on an instruction of the propulsion instruction part 8. The power of the engine 10 is increased or decreased with a goal of required power included in an acceleration instruction or a deceleration instruction of the propulsion instruction part 8. At this time, the controller 60 changes at least either one of the opening degree of the throttle valve SV and the fuel jetting amount from the fuel jetting device 18 while acquiring the input electric current Ii of the inverter 80 and the vehicle speed of the vehicle 1.

In the vehicle 1 of the present example, power according to target power can be output while suppressing the fuel consumption of the engine 10 during acquiring the charged level of the battery 4.

After the engine controller 61 increases the engine power of the engine 10 in step S66, the operation proceeds to step S67, and the electric current output controller 633 controls the converter 70 so as to change the output electric current Ic from the converter 70. The output electric current Ic of the converter 70 is increased or decreased so as to correspond with the variation of the input electric current Ii of the inverter 80.

After the electric current output controller 633 changes the output electric current Ic from the converter 70 in step S67, the operation returns to step S61 again. In steps S61 to S63 again, the electric current output controller 643 controls the output electric current Ic of the converter 70 to correspond with the electric current variation of the inverter 80 such that the variation amount of output electric current Ic of the converter 70 is equal to or substantially equal to the variation amount of input electric current Ii of the inverter 80.

If it is determined that the acceleration instruction, the deceleration instruction, or the required power by the propulsion instruction part 8 is not changed in step S64, the electric current output controller 643 determines whether the SOC of the battery 4 has been calculated. If it is determined that the SOC of the battery 4 has been calculated in step S68, the electric current output controller 643 finishes the electric current output control of the output electric current from the converter 70. If it is determined that the SOC of the battery 4 has not been calculated in step S68, the operation returns to step S61 again, and the electric current output controller 643 determines whether the output electric current Ic of the converter 70 is larger than the input electric current Ii of the inverter 80.

A series hybrid vehicle can be a drone having rotor blades as the propulsion system 3b. In this case, the propulsion instruction part 8 (for example, see Fig. 1) according to a particular embodiment is a reception part that receives wireless signals indicating an acceleration instruction or a deceleration instruction from a remote-control device (not illustrated) operated by an operator. The reception part outputs an acceleration instruction or a deceleration instruction. The drone as the vehicle 1 may have an automatic propulsion controller as the propulsion instruction part 8. The automatic propulsion controller outputs an acceleration instruction or a deceleration instruction when automatic steering and attitude control are performed while receiving the operation from a remote-control device.

According to another particular embodiment, the control of the vehicle 1 is applied to an autonomous vehicle. The propulsion instruction part 8 in the present embodiment (for example, see Fig. 1) outputs an acceleration instruction or a deceleration instruction during autonomous driving based on the travel route and the speed set along the travel route. For example, the propulsion instruction part 8 (for example, see Fig. 1) according to the present embodiment may be a reception part that receives wireless signals indicating an acceleration instruction or a deceleration instruction from a remote-control device (not illustrated) operated by an operator.

### Reference Signs List

- 1: Vehicle
- 2: Vehicle body
- 3b: Propulsion system
- 4: Battery
- 8: Propulsion instruction part
- 10: Power generation engine
- 11: Crankcase
- 12: Cylinder
- 13: Piston
- 14: Connecting rod
- 15: Crankshaft
- 16: Cylinder head
- 18: Fuel jetting device
- 19: Ignition plug
- 20: Power generation electric motor
- 21, 31: Rotor
- 22, 32: Stator
- 24, 34: Rotor position detection device
- 30: Propulsive electric motor
- 60: Controller
- 61: Engine controller
- 62: Power generation controller
- 63: Propulsion controller
- 64: Charged level acquiring part
- 65: Electric current and voltage sensor
- 70: Converter
- 80: Inverter
- 90: Driving shaft
- GU: Power generation unit
- DU: Propulsion unit
- SV: Throttle valve

## Claims

1. A vehicle (1), comprising:
a power generation engine (10) having a rotatable crankshaft (15) and configured to output power generated by engine combustion via the crankshaft (15);
a power generation electric motor (20) disposed so as to operate in conjunction with the crankshaft (15) and configured to be driven by the power generation engine (10) to generate electric power;
a converter (70) configured to rectify an electric current outputted from the power generation electric motor (20) and output the electric current;
a propulsive electric motor (30) that is different from the power generation electric motor (20) and configured to receive a supplied electric current and to output power;
an inverter (80) configured to drive the propulsive electric motor (30) by at least part of an electric current outputted from the converter (70);
a battery (4) connected to the inverter (80) such that the battery (4) is in parallel with the inverter (80), both being connected to the converter (70) and the battery (4) configured to charge an electric current outputted from the converter (70) and supply the charged electric current to the inverter (80);
a propulsion system (3b); and
a propulsion instruction part (8) configured to output an acceleration instruction or a deceleration instruction of the vehicle (1), wherein
the vehicle is a series hybrid vehicle (1),
the propulsion system (3b) is configured to be driven by power outputted from the propulsive electric motor (30), which is configured to propel the series hybrid vehicle (1), without being connected to a transmission path for mechanically transmitting power from the crankshaft (15), and
the series hybrid vehicle (1) comprises a controller (60) configured to control the power generation engine (10), the converter (70), and the inverter (80) such that
both an electric current outputted from the converter (70) and an electric current supplied to the inverter (80) based on the acceleration instruction from the propulsion instruction part (8) are increased and
both an electric current outputted from the converter (70) and an electric current supplied to the inverter (80) based on the deceleration instruction from the propulsion instruction part (8) are decreased,
thereby outputting power from the propulsive electric motor (30) based on the acceleration instruction or the deceleration instruction while supplying an electric current, which is generated by the power generation electric motor (20) due to an operation of the power generation engine (10), from the converter (70) to the inverter (80) without supplying or without substantially supplying the electric current generated by the power generation electric motor (20) to the battery (4), and configured to acquire the charged level of the battery (4) based on the voltage of the battery (4), wherein
the controller (60) is further configured to control an outputted electric current of the converter (70) to correspond with an electric current variation of the inverter (80) such that a variation amount of outputted electric current of the converter (70) is equal to or substantially equal to a variation amount of input electric current of the inverter (80) during a period for acquiring the charged level of the battery (4), and is **characterized in that**
the controller (60) is configured to change an engine rotation speed of the power generation engine (10) by changing a load torque of the power generation electric motor (20) before the acceleration instruction such that a target power according to the acceleration instruction can be outputted, by the acceleration instruction as a trigger, from the propulsive electric motor (30) that is driven by the electric power supplied from the power generation electric motor (20).

2. The series hybrid vehicle (1) according to claim 1, wherein
the propulsion instruction part (8) is an accelerator manipulator configured to be operated by an operator of the series hybrid vehicle (1).

3. The series hybrid vehicle (1) according to claim 1, wherein
the propulsion instruction part (8) is a reception part configured to output the acceleration instruction or the deceleration instruction based on wireless signals received from a remote-control device away from the series hybrid vehicle (1).

4. The series hybrid vehicle (1) according to claim 1, wherein
the propulsion instruction part (8) is an autonomous propulsion instruction part configured to output the acceleration instruction or the deceleration instruction based on travel route information of the series hybrid vehicle (1) regardless of operation for acceleration or deceleration by an operator.

## Patentansprüche

1. Ein Fahrzeug (1), das folgende Merkmale aufweist:
eine Leistungserzeugungsmaschine (10), die eine drehbare Kurbelwelle (15) aufweist und dazu konfiguriert ist, Leistung, die durch motorische Verbrennung erzeugt wird, über die Kurbelwelle (15) auszugeben;
einen Leistungserzeugungselektromotor (20), der angeordnet ist, um in Verbindung mit der Kurbelwelle (15) zu arbeiten, und dazu konfiguriert ist, durch die Leistungserzeugungsmaschine (10) angetrieben zu werden, um elektrische Leistung zu erzeugen;
einen Wandler (70), der dazu konfiguriert ist, einen elektrischen Strom, der von dem Leistungserzeugungselektromotor (20) ausgegeben wird, gleichzurichten und den elektrischen Strom auszugeben;
einen Antriebselektromotor (30), der sich von dem Leistungserzeugungselektromotor (20) unterscheidet und dazu konfiguriert ist, einen zugeführten elektrischen Strom zu empfangen und Leistung auszugeben;
einen Inverter (80), der dazu konfiguriert ist, den Antriebselektromotor (30) anzutreiben durch zumindest einen Teil eines elektrischen Stroms, der von dem Wandler (70) ausgegeben wird;
eine Batterie (4), die mit dem Inverter (80) verbunden ist, so dass die Batterie (4) parallel zu dem Inverter (80) ist, beide mit dem Wandler (70) verbunden sind und die Batterie (4) dazu konfiguriert ist, einen elektrischen Strom, der von dem Wandler (70) ausgegeben wird, zu laden, und den geladenen elektrischen Strom dem Inverter (80) zuzuführen;
ein Antriebssystem (3b); und
ein Antriebsanweisungsteil (8), das dazu konfiguriert ist, eine Beschleunigungsanweisung oder eine Verlangsamungsanweisung des Fahrzeugs (1) auszugeben, wobei
das Fahrzeug ein Serienhybridfahrzeug (1) ist,
das Antriebssystem (3b) dazu konfiguriert ist, durch Leistung angetrieben zu werden, die von dem Antriebselektromotor (30) ausgegeben wird, der dazu konfiguriert ist, das Serienhybridfahrzeug (1) anzutreiben, ohne mit einem Übertragungsweg zum mechanischen Übertragen von Leistung von der Kurbelwelle (15) verbunden zu sein und
das Serienhybridfahrzeug (1) eine Steuerung (60) aufweist, die dazu konfiguriert ist, die Leistungserzeugungsmaschine (10), den Wandler (70) und den Inverter (80) zu steuern, so dass
sowohl ein elektrischer Strom, der von dem Wandler (70) ausgegeben wird, als auch ein elektrischer Strom, der dem Inverter (80) zugeführt wird, basierend auf der Beschleunigungsanweisung von dem Antriebsanweisungsteil (8) erhöht werden und
sowohl ein elektrischer Strom, der von dem Wandler (70) ausgegeben wird, als auch ein elektrischer Strom, der dem Inverter (80) zugeführt wird, basierend auf der Verlangsamungsanweisung von dem Antriebsanweisungsteil (8) verringert werden,
wodurch Leistung von dem Antriebselektromotor (30) basierend auf der Beschleunigungsanweisung oder der Verlangsamungsanweisung ausgegeben wird, während ein elektrischer Strom, der durch den Leistungserzeugungselektromotor (20) aufgrund eines Betriebs der Leistungserzeugungsmaschine (10) erzeugt wird, von dem Wandler (70) dem Inverter (80) zugeführt wird, ohne den elektrischen Strom, der durch den Leistungserzeugungselektromotor (20) erzeugt wird, der Batterie (4) zuzuführen oder kaum zuzuführen, und dazu konfiguriert ist, den Ladepegel der Batterie (4) basierend auf der Spannung der Batterie (4) zu erfassen, wobei
die Steuerung (60) ferner dazu konfiguriert ist, einen ausgegebenen elektrischen Strom des Wandlers (70) zu steuern, so dass derselbe einer elektrischen Stromschwankung des Inverters (80) entspricht, so dass ein Schwankungsbetrag des ausgegebenen elektrischen Stroms des Wandlers (70) gleich oder im Wesentlichen gleich ist wie ein Schwankungsbetrag des eingegebenen elektrischen Stroms des Inverters (80), während einer Periode zum Erfassen des Ladepegels der Batterie (4) und **dadurch gekennzeichnet ist, dass**
die Steuerung (60) dazu konfiguriert ist, eine Maschinendrehgeschwindigkeit der Leistungserzeugungsmaschine (10) zu ändern durch Ändern eines Lastdrehmoments des Leistungserzeugungselektromotors (20) vor der Beschleunigungsanweisung, so dass eine Zielleistung gemäß der Beschleunigungsanweisung ausgegeben werden kann, durch die Beschleunigungsanweisung als ein Auslöser von dem Antriebselektromotor (30), der durch die elektrische Leistung angetrieben wird, die von dem Leistungserzeugungselektromotor (20) zugeführt wird.

2. Das Serienhybridfahrzeug (1) gemäß Anspruch 1, bei dem
das Antriebsanweisungsteil (8) ein Beschleunigungsmanipulator ist, der dazu konfiguriert ist, durch einen Betreiber des Serienhybridfahrzeugs (1) betätigt zu werden.

3. Das Serienhybridfahrzeug (1) gemäß Anspruch 1, bei dem
das Antriebsanweisungsteil (8) ein Empfangsteil ist, das dazu konfiguriert ist, die Beschleunigungsanweisung oder die Verlangsamungsanweisung basierend auf Drahtlossignalen auszugeben, die von einer Fernsteuerungsvorrichtung entfernt von dem Serienhybridfahrzeug (1) empfangen werden.

4. Das Serienhybridfahrzeug (1) gemäß Anspruch 1, bei dem
das Antriebsanweisungsteil (8) ein autonomes Antriebsanweisungsteil ist, das dazu konfiguriert ist, die Beschleunigungsanweisung oder die Verlangsamungsanweisung basierend auf Fahrtrouteninformationen des Serienhybridfahrzeugs (1) auszugeben, unabhängig von der Betätigung für Beschleunigung oder Verlangsamung durch einen Betreiber.

## Revendications

1. Véhicule (1), comprenant:
un moteur de génération d'énergie (10) présentant un vilebrequin rotatif (15) et configuré pour sortir de l'énergie générée par la combustion du moteur par l'intermédiaire du vilebrequin (15);
un moteur électrique de génération d'énergie (20) disposé de manière à fonctionner ensemble avec le vilebrequin (15) et configuré pour être entraîné par le moteur de génération d'énergie (10) pour générer de l'énergie électrique;
un convertisseur (70) configuré pour rectifier un courant électrique sorti du moteur électrique de génération d'énergie (20) et pour sortir le courant électrique;
un moteur électrique de propulsion (30) qui est différent du moteur électrique de génération d'énergie (20) et configuré pour recevoir un courant électrique alimenté et pour sortir de l'énergie;
un onduleur (80) configuré pour entraîner le moteur électrique de propulsion (30) par au moins une partie d'un courant électrique sorti de l'onduleur (70);
une batterie (4) connectée à l'onduleur (80) de sorte que la batterie (4) se situe en parallèle avec l'onduleur (80), tous deux étant connectés au convertisseur (70), et la batterie (4) étant configurée pour charger un courant électrique sorti par le convertisseur (70) et pour alimenter le courant électrique chargé vers l'onduleur (80);
un système de propulsion (3b); et
une partie d'instruction de propulsion (8) configurée pour sortir une instruction d'accélération ou une instruction de décélération du véhicule (1),
dans lequel
le véhicule est un véhicule hybride en série (1),
le système de propulsion (3b) est configuré pour être entraîné par l'énergie sortie du moteur électrique de propulsion (30) qui est configuré pour propulser le véhicule hybride en série (1), sans être connecté à un trajet de transmission pour transmettre mécaniquement l'énergie à partir du vilebrequin (15), et
le véhicule hybride en série (1) comprend un moyen de commande (60) configuré pour commander le moteur de génération d'énergie (10), le convertisseur (70) et l'onduleur (80) de sorte que
tant un courant électrique sorti par le convertisseur (70) qu'un courant électrique alimenté vers l'onduleur (80) sur base de l'instruction d'accélération de la partie d'instruction de propulsion (8) soient augmentés et
tant un courant électrique sorti par le convertisseur (70) qu'un courant électrique alimenté vers l'onduleur (80) sur base de l'instruction de décélération de la partie d'instruction de propulsion (8) soient diminués,
sortant ainsi de l'énergie du moteur électrique de propulsion (30) sur base de l'instruction d'accélération ou de l'instruction de décélération tout en alimentant un courant électrique, qui est généré par le moteur électrique de génération d'énergie (20) du fait d'un fonctionnement du moteur de génération d'énergie (10), du convertisseur (70) vers l'onduleur (80) sans alimenter ou sans alimenter sensiblement le courant électrique généré par le moteur électrique de génération d'énergie (20) vers la batterie (4), et configuré pour acquérir le niveau de charge de la batterie (4) sur base de la tension de la batterie (4),
dans lequel
le moyen de commande (60) est par ailleurs configuré pour commander un courant électrique sorti par le convertisseur (70) de manière à correspondre à une variation de courant électrique de l'onduleur (80) de sorte qu'une quantité de variation du courant électrique sorti par le convertisseur (70) soit égale ou sensiblement égale à une quantité de variation du courant électrique d'entrée de l'onduleur (80) pendant une période d'acquisition du niveau de charge de la batterie (4), et
est **caractérisé par le fait que**
le moyen de commande (60) est configuré pour modifier une vitesse de rotation du moteur de génération d'énergie (10) en modifiant un couple de charge du moteur électrique de génération d'énergie (20) avant l'instruction d'accélération de sorte qu'une puissance cible selon l'instruction d'accélération puisse être sortie, par l'instruction d'accélération comme déclencheur, du moteur électrique de propulsion (30) qui est entraîné par l'énergie électrique alimentée du moteur électrique de génération d'énergie (20).

2. Véhicule hybride en série (1) selon la revendication 1, dans lequel
la partie d'instruction de propulsion (8) est un manipulateur d'accélérateur configuré pour être actionné par un opérateur du véhicule hybride en série (1).

3. Véhicule hybride en série (1) selon la revendication 1, dans lequel
la partie d'instruction de propulsion (8) est une partie de réception configurée pour sortir l'instruction d'accélération ou l'instruction de décélération sur base de signaux sans fil reçus d'un dispositif de commande à distance du véhicule hybride en série (1).

4. Véhicule hybride en série (1) selon la revendication 1, dans lequel
la partie d'instruction de propulsion (8) est une partie d'instruction de propulsion autonome configurée pour sortir l'instruction d'accélération ou l'instruction de décélération sur base d'informations d'itinéraire de déplacement du véhicule hybride en série (1), indépendamment de l'opération d'accélération ou de décélération par un opérateur.
